(19) Europäisches Patentamt
European Patent Office
Office européen des brevets

(11) Veröffentlichungsnummer: **0 464 058 B1**

(12) **EUROPÄISCHE PATENTSCHRIFT**

(45) Veröffentlichungstag der Patentschrift: **14.06.95**

(51) Int. Cl.[6]: **C09K 19/58**, C09K 19/34, C09K 19/46

(21) Anmeldenummer: **90904624.5**

(22) Anmeldetag: **21.03.90**

(86) Internationale Anmeldenummer:
**PCT/EP90/00457**

(87) Internationale Veröffentlichungsnummer:
**WO 90/11335 (04.10.90 90/23)**

# (54) FERROELEKTRISCHE FLÜSSIGKRISTALLINE MISCHUNGEN.

(30) Priorität: **22.03.89 DE 3909355**

(43) Veröffentlichungstag der Anmeldung:
**08.01.92 Patentblatt 92/02**

(45) Bekanntmachung des Hinweises auf die Patenterteilung:
**14.06.95 Patentblatt 95/24**

(84) Benannte Vertragsstaaten:
**DE**

(56) Entgegenhaltungen:
**EP-A- 0 263 437**
**EP-A- 0 351 746**
**EP-A- 0 355 561**
**DE-A- 3 831 226**

(73) Patentinhaber: **HOECHST AKTIENGESELLSCHAFT**

**D-65926 Frankfurt (DE)**

(72) Erfinder: **DÜBAL, Hans-Rolf**
**Heuhohlweg 6**
**D-6240 Königstein (DE)**
Erfinder: **ESCHER, Claus**
**Amselweg 3**
**D-6109 Mühltal (DE)**
Erfinder: **HARADA, Takamasa**
**Paul-Kornfeld-Weg 67**
**D-6000 Frankfurt am Main 50 (DE)**
Erfinder: **HEMMERLING, Wolfgang**
**Billtalstrasse 32**
**D-6231 Sulzbach (DE)**
Erfinder: **ILLIAN, Gerhard**
**Rauenthaler Weg 32**
**D-6230 Frankfurt am Main 80 (DE)**
Erfinder: **MÜLLER, Ingrid**
**Am Pfingstbrunnen 1**
**D-6238 Hofheim (DE)**
Erfinder: **MURAKAMI, Mikio New Town Blg. 202**
**8-1, Minami 2-chome**
**Kakegawa-shi**
**Skizuoka-ken (JP)**
Erfinder: **OHLENDORF, Dieter**
**Am Kühlen Grund 4**
**D-6237 Liederbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

Erfinder: **WINGEN, Rainer**
**Brunnenstrasse 1**
**D-6234 Hattersheim am Main (DE)**

**Beschreibung**

Ferroelektrische Flüssigkristalle haben in jüngerer Zeit Interesse als Anzeigemedium in elektro-optischen Bauelementen gewonnen (z.B. Lagerwall et al. "Ferroelectric Liquid Crystals for Displays", SID Symposium, October Meeting 1985, San Diego, Ca. USA).

Für die praktische Verwendung von ferroelektrischen Flüssigkristallen in elektro-optischen Anzeigen werden chirale, geneigt-smektische Phasen wie $S_c$-Phasen benötigt [R.B. Meyer, L. Liébert, L. Strzelecki und P. Keller, J. Physique 36, L-69 (1975)], die über einen großen Temperaturbereich stabil sind. Dieses Ziel kann man erreichen mit Verbindungen, die selbst solche Phasen, z.B. $S_c$-Phasen, ausbilden oder aber, indem man nicht chirale, geneigt-smektische Phasen ausbildende Verbindungen mit optisch aktiven Verbindungen dotiert [M. Brunet, Cl. Williams, Ann. Phys. 3, 237 (1978)].

Weiterhin ist bei der Verwendung ferroelektrischer Flüssigkristallmischungen in elektro-optischen Bauelementen eine einheitliche planare Orientierung der Flüssigkristalle notwendig, um ein hohes Kontrastverhältnis zu erzielen. Es hat sich gezeigt, daß sich eine einheitliche planare Orientierung in der $S_c$-Phase erreichen läßt, wenn die Phasenfolge der Flüssigkristallmischung mit abnehmender Temperatur lautet:

Isotrop → nematisch → smektisch A → smektisch C.

(z.B. K. Flatischler et al., Mol. Cryst. Liq. Cryst. 131, 21 (1985); T. Matsumoto et al., p. 468-470, Proc. of the 6th Int. Display Research Conf., Japan Display, 30. September-2. October 1986, Tokyo, Japan; M. Murakami et al., ibid. p. 344-347).

Für ferroelektrische (chiral smektische) Flüssigkristallmischungen muß zusätzlich die Bedingung erfüllt sein, daß die Ganghöhe (pitch) der Helix in der $S_c^*$-Phase groß, d.h. größer als 5 $\mu$m, und in der $N^*$-Phase sehr groß, d.h. größer als 10 $\mu$m bzw. unendlich ist.

Die optische Schaltzeit $\tau[\mu s]$ ferroelektrischer Flüssigkristallsysteme, die möglichst kurz sein soll, hängt von der Rotationsviskosität des Systems $\gamma$[mPas], der spontanen Polarisation $P_s$[nC/cm$^2$] und der elektrischen Feldstärke E[V/m] ab nach der Beziehung

$$\tau \approx \frac{\gamma}{P_S \cdot E}$$

Da die Feldstärke E durch den Elektrodenabstand im elektrooptischen Bauteil und durch die angelegte Spannung festgelegt ist, muß das ferroelektrische Anzeigemedium niedrigviskos sein und eine hohe spontane Polarisation aufweisen, damit eine kurze Schaltzeit erreicht wird.

Schließlich wird neben thermischer, chemischer und photochemischer Stabilität eine kleine optische Anisotropie $\Delta n$, vorzugsweise <0.13, und eine gering positive oder vorzugsweise negative dielektrische Anisotropie $\Delta\epsilon$ verlangt. (S.T. Lagerwall et al., "Ferroelectric Liquid Crystals for Displays" SID Symposium, Oct. Meeting 1985, San Diego, Ca, USA).

Die Gesamtheit dieser Forderungen ist nur mit Mischungen aus mehreren Komponenten zu erfüllen. Als Basis (oder Matrix) dienen dabei bevorzugt Verbindungen, die möglichst selbst bereits die gewünschte Phasenfolge $I \rightarrow N \rightarrow S_A \rightarrow S_c$ aufweisen. Weitere Komponenten der Mischung werden oftmals zur Schmelzpunktserniedrigung und zur Verbreiterung der $S_c$- und meist auch der N-Phase, zum Induzieren der optischen Aktivität, zur pitch-Kompensation und zur Anpassung der optischen und dielektrischen Anisotropie zugesetzt, wobei aber beispielsweise die Rotationsviskosität möglichst nicht vergrößert werden soll.

Einzelne dieser Komponenten und auch bestimmte Mischungen sind bereits aus dem Stand der Technik bekannt. Da aber die Entwicklung, insbesondere von ferroelektrischen Flüssigkristall-Mischungen, noch in keiner Weise als abgeschlossen betrachtet werden kann, sind die Hersteller von Anzeigeelementen ("displays") an unterschiedlichsten Mischungen interessiert. Dieses u.a. auch deshalb, weil erst das Zusammenwirken der flüssigkristallinen Mischungen mit den einzelnen Bauteilen der Anzeigelemente bzw. der Zellen (z.B. der Orientierungsschicht) Rückschlüsse auf die Qualität auch der flüssigkristallinen Mischungen zuläßt.

Es ist bekannt, daß bestimmte Derivate des Phenylpyrimidins, insbesondere 5-Alkyl-2(4-alkyloxy-phenyl)-pyrimidine, $S_c$-, $S_A$- und N-Phasen ausbilden können (D. Demus und H. Zaschke, "Flüssige Kristalle in Tabellen", VEB Deutscher Verlag für Grundstoffindustrie, Leipzig 1974, S. 260-261) und daneben durch Zusatz optisch aktiver Dotierstoffe in ferroelektrische Flüssigkristall-Mischungen umgewandelt werden

können [L.M. Blinov et al., Sow. Phys. Usp. 27 (7), 492 (1984); L.A. Beresnew et al., Ferroelectrics, 59 - [321]/1 (1984), vorgetragen auf der 5th. Conference of Soc. Countries on Liquid Crystals, Odessa, UdSSR, Oct. 1983; DE-A 35 15 347, EP-A 0 206 228, EP-A 0 225 195].

Es ist weiter bekannt, daß tiefere Schmelzpunkte und eine Verbreiterung der gewünschten flüssigkristallinen Phasen durch Mischen mehrerer flüssigkristalliner Verbindungen erreicht werden [D. Demus et al., Mol. Cryst. Liq. Cryst. 25, 215 (1974), J.W. Goodby, Ferroelectrics 49, 275 (1983)], und daß die Schmelzpunktsdepression umso ausgeprägter ist, je stärker sich auch die Mischungskomponenten strukturell unterscheiden. (J.S. Dave et al., J. Chem. Soc. 1955, 4305). Es war also davon auszugehen, daß besonders tiefe Mischungsschmelzpunkte und damit tiefe Phasenumwandlungspunkte der $S_c$-Phase erhalten werden, wenn Verbindungen gemischt werden, die sich einerseits strukturell wesentlich unterscheiden, andererseits aber ähnlich genug sind, um gut mischbar zu sein.

Aus der DE-C 22 57 588 ist ein 5-Butyloxy-2(-4-pentyloxy-phenyl)-pyrimidin bekannt, das aber nur eine nematische Phase bildet.

Es wurde in DE 38 31 226.3 gefunden, daß sich als Basiskomponente Verbindungen vom Typ 5-Alkyloxy-2(4-alkyloxy-phenyl)-pyrimidine der allgemeinen Formel (I)

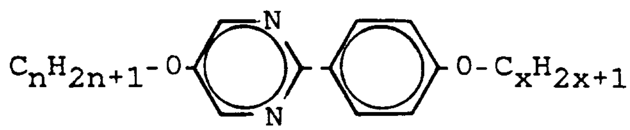

(I),

in der $C_nH_{2n+1}$ und $C_xH_{2x+1}$ geradkettige Alkylreste sind, in denen n eine ganze Zahl von 6 bis 14 und x eine ganze Zahl von 2 bis 14 bedeuten, für flüssigkristalline, insbesondere ferroelektrische flüssigkristalline Mischungen besonders gut eignen; von ihnen sind mindestens 2 unterschiedliche Verbindungen a' und a'' im Gemisch vorhanden. Sie zeigen größtenteils mit abnehmender Temperatur die erwünschte Phasenfolge $I \rightarrow N \rightarrow S_A \rightarrow S_c$. Im Vergleich zu den bekannten 5-Alkyl-2-(4-alkoxy-phenyl)-pyrimidinen weisen sie erheblich breitere $S_c$-Phasen und höhere Umwandlungstemperaturen des $S_c \rightarrow S_A$-Übergangs auf. Die $S_c$-Phase wird außerdem bereits bei einer niedrigeren Anzahl von C-Atomen in den Alkyl(oxy)ketten gebildet, z.B. bereits dann, wenn n = 8 und x $\not>$2 oder n = 6 und x $\not>$6 sind. Es ergibt sich daraus für die Mischungsherstellung im Vergleich zu den bekannten 5-Alkyl-2-(4-alkoxy-phenyl)-pyrimidinen eine größere Auswahl an homologen, gut mischbaren Verbindungen mit $S_c$-Phasen. Diese ermöglichen es außerdem aufgrund ihrer höheren Phasenumwandlungstemperaturen $S_A$ nach $S_c$ (z.B. 70 bis 90 °C) und ihrer breiteren $S_c$-Phasen, Mischungen mit sehr breiten $S_c$-Phasen (z.B. bis zu ca. 68 ° Phasenbreite) und hohen Umwandlungstemperaturen $S_A/S_c$ herzustellen.

Die Mischungen gemäß DE 38 31 226.3 aus Verbindungen der Formel (I) eignen sich bereits sehr gut als Matrix für ferroelektrische flüssigkristalline Mischungen. Sie weisen allerdings noch eine große optische ($\Delta n$) und eine große positive dielektrische ($\Delta\epsilon$) Anisotropie auf. Außerdem ist die nematische Phase, je nach der Kettenlänge n bzw. x der Substituenten, noch schmal.

Durch Zusatz mindestens einer Verbindung (Cyclohexancarbonsäureester) der allgemeinen Formel (II), d. h. einer Verbindung vom Typ b,

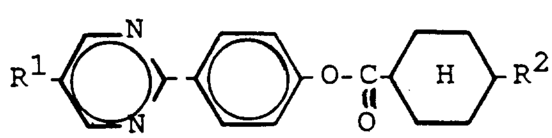

(II)

können gleichzeitig die Größen [$\Delta n$] und [$\Delta\epsilon$] optimiert und die Breite der nematischen Phase den praktischen Anforderungen angepaßt werden.

Es bedeuten in der allgemeinen Formel (II):

$R^1$ eine Alkylkette mit 10 bis 16 oder eine Alkoxykette mit 8 bis 14 C-Atomen und $R^2$ eine Alkylkette mit 2 bis 9 C-Atomen. Diese Verbindungen werden in der DE-A 37 31 639 beschrieben. Sie entfalten ihre günstige Wirkung bereits bei Zusatzmengen ab etwa 2 mol% bezogen auf die Mischung aus den Komponenten vom Typ a und b. Bei Zusatzmengen ab etwa 10 und bis etwa 40 mol% ergibt sich eine Verbreiterung der nematischen Phase um etwa 8 bis 18 °C und der smektischen Phase um etwa 6 bis 15 °C. Sehr vorteilhaft ist es daneben, daß der Zusatz die an sich bereits sehr niedrige Rotationsviskosität der erfindungsgemäßen Basis-Mischung nur unwesentlich erhöht.

Eine Absenkung des Schmelzpunkts und der unteren Phasenumwandlungstemperatur der $S_c$-Phase der Mischungen kann, wenn diese noch zu hoch liegen, durch Zusatz mindestens einer Verbindung (Alkenyloxy-phenyl-pyrimidin-Derivat) der allgemeinen Formel (III), d. h. einer Verbindung vom Typ c, zu Mischungen aus Verbindungen vom Typ a alleine oder mit einem zusätzlichen Gehalt an Verbindungen vom Typ b erreicht werden:

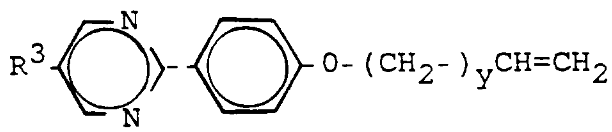 (III)

In der allgemeinen Formel (III) bedeuten $R^3$ einen verzweigten oder geradkettigen Alkylrest mit 7 bis 16 C-Atomen oder einen geradkettigen oder verzweigten Alkoxyrest mit 6 bis 14 C-Atomen und y eine ganze Zahl von 4 bis 14. Diese Verbindungen werden in der DE-A 37 31 638 beschrieben. Zusatzmengen von etwa 10 bis 35 mol%, bezogen auf die Gesamtmischung, bewirken eine Absenkung der unteren Temperaturgrenze der $S_c$-Phase um bis zu 5 °C. Die übrigen günstigen physikalischen Eigenschaften der Mischungen werden durch diesen Zusatz in der Regel nicht beeinträchtigt.

Zur Absenkung des Schmelzpunkts und der unteren Temperaturgrenze der $S_c$-Phase können zusammen mit Verbindungen des Typs c oder an ihrer Stelle auch Verbindungen der Formel (IV), d. h. des Typs d,

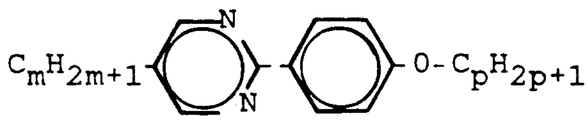 (IV)

zugesetzt werden, wobei m und p unabhängig voneinander ganze Zahlen von 6 bis 14 sind. Bei Zusatzmengen von etwa 10 bis 25 mol% der Verbindung des Typs d bzw. Mischungen mit Verbindungen des Typs c, bezogen auf die Gesamtmischung, zu Mischungen aus Verbindungen des Typs a bzw. a und b ergeben sich Absenkungen der unteren Temperaturgrenze der $S_c$-Phase um bis zu 10 °C.

Zur weiteren Absenkung des Schmelzpunktes sowie zur Verbesserung der optischen und dielektrischen Anisotropie und damit des Kontrastes in einem Display wurden ferner folgende Carbonsäureester als Mischungskomponenten für eine flüssigkristalline Grundmischung vorgeschlagen:
Carbonsäureester C der allgemeinen Formeln (V), (VI), (VII), (VIII) oder (IX)

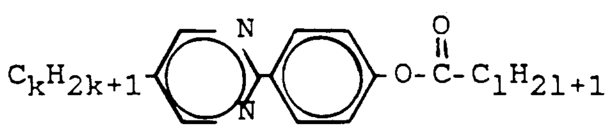 (V),

wobei
k eine ganze Zahl von 6 bis 14 und
l eine ganze Zahl von 2 bis 14 bedeuten kann,

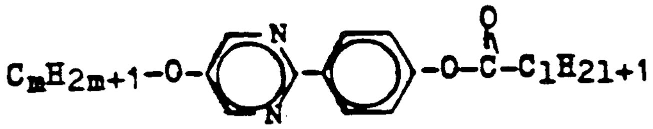 (VI),

wobei
m eine ganze Zahl von 5 bis 14 und
l eine ganze Zahl von 2 bis 14 bedeuten kann,

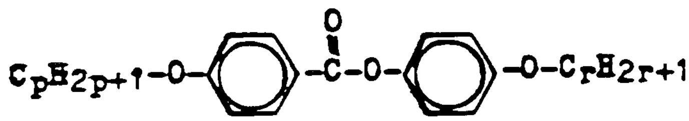

(VII),

wobei
p eine ganze Zahl von 7 bis 14 und
r eine ganze Zahl von 4 bis 14 bedeuten kann,

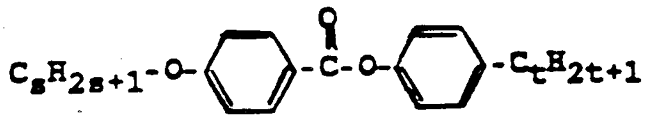

(VIII),

wobei
s eine ganze Zahl von 6 bis 14 und
t eine ganze Zahl von 6 bis 14 bedeuten kann,

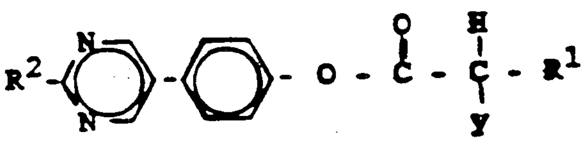

(IX)

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
Y = F, Cl, Br, CN oder $CF_3$ und
$R^1$ = verzweigtes ($C_3$-$C_9$)-Alkyl, Benzyl oder Phenyl.

Aufgabe der vorliegenden Erfindung ist es, durch besonders geeignete Dotierstoffe in flüssigkristallinen Grundmischungen zu neuen ferroelektrischen LC-Mischungen zu gelangen, die eine hohe spontane Polarisation [$P_s$],eine niedrige Viskosität und eine gute Orientierbarkeit in einem Anzeigeelement besitzen.

Die Erfindung geht von Grundmischungen aus, die in
DE 38 31 226 und in DE-A-3 909 356
vorgestellt wurden. Die neuen, erfindungsgemäßen Mischungen enthalten aber darüber hinaus eine chirale, optisch aktive Komponente D als Dotierstoff, die zu einer großen Ganghöhe der Helix (pitch) in der N*-Phase der Mischung führt und die schon in geringer Konzentration eine hohe spontane Polarisation ($P_s$) induziert.

Der Zusatz von Dotierstoffen, die zu einer hohen spontanen Polarisation führen, in kleinen Mengen ist deshalb von Vorteil, weil die Viskosität der Gesamt-FLC-Mischung nicht wesentlich erhöht wird.

Besonders vorteilhaft ist die Verwendung von zwei Dotierstoffen D, die beide das gleiche Vorzeichen der spontanen Polarisation aber einen unterschiedlichen Helix-Drehsinn aufweisen. Dadurch kommt es bei der Kompensation des pitches zu einem synergistischen Effekt der Steigerung der spontanen Polarisation.

Gegenstand der Erfindung sind somit auch Dotierstoff-Kombinationen, die in den genannten Basismischungen diesen synergistischen Effekt aufweisen.

In der älteren, nicht vorveröffentlichten EP-A 0 355 561 ist bereits eine ferroelektrische Flüssigkristallmischung, bestehend aus
5-Octyloxy-2-[4-hexyloxyphenyl]pyrimidin
5-Octyloxy-2-[4-octyloxyphenyl]pyrimidin
5-Octyloxy-2-[4-butyloxyphenyl]pyrimidin
5-Octyloxy-2-[4-decyloxyphenyl]pyrimidin
5-Octyloxy-2-[4-dodecyloxyphenyl]pyrimidin
5-Octyloxy-2-[4-dodecylphenyl]pyrimidin
trans-4-Pentyl-cyclohexancarbonsäure-[4-(5-decyl-pyrimidin-2-yl]-phenylester
4-[5-Octylpyrimidin-2-yl]phenylhexancarbonsäureester

4-(Nonyloxypyrimidin-5-yl)-phenyl-2-chlor-4-methyl-pentansäureester (Racemat)
(R)-4-(5-n-Octyloxypyrimidin-2-yl)-phenyl-(2,2-pentamethylen-1,3-dioxolan-4-yl)methylether
(2R,3R)-3-Propyl-oxiran-2-carbonsäure-[4-(2-octyloxy-pyrimidin-5-yl)phenyl]-ester und
(R)-Tetrahydrofuran-2-carbonsäure-[4-(5-n-octylpyrimidin-2-yl]ester,
beschrieben.

Die neue Erfindung umfaßt somit eine ferroelektrische flüssigkristalline Mischung, enthaltend als Komponente A mindestens zwei 5-Alkoxy-2-(alkyloxy-phenyl)pyrimidine der allgemeinen Formel (I)

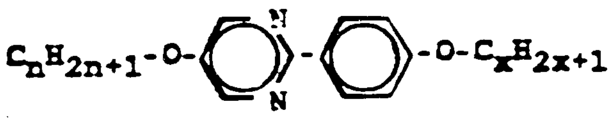 (I),

in der die Alkylreste geradkettige Alkylreste sind, in denen n eine ganze Zahl von 6 bis 14 und x eine ganze Zahl von 2 bis 14 bedeutet, und
gegebenenfalls einen oder mehrere Cyclohexancarbonsäureester der allgemeinen Formel (II)

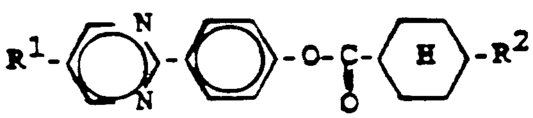 (II),

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeutet, und
gegebenenfalls ein oder mehrere Alkenyloxyphenyl-pyrimidin-Derivate der allgemeinen Formel (III)

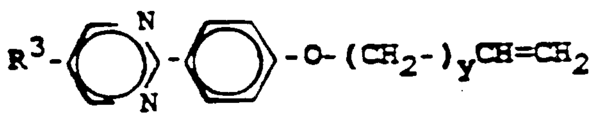 (III)

in der $R^3$ eine Alkylkette mit 7 bis 16 C-Atomen oder eine Alkyloxykette mit 6 bis 14 C-Atomen und y eine ganze Zahl von 4 bis 14 bedeutet, und
gegebenenfalls ein oder mehrere Alkyl-pyrimidinalkoxyphenyl-Derivate der allgemeinen Formel (IV)

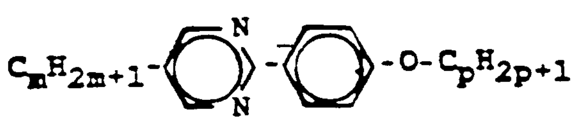 (IV)

in der m und p unabhängig voneinander ganze Zahlen von 6 bis 14 sind,
sowie gegebenenfalls als Komponente B eine optisch aktive Verbindung aus der Gruppe

a) optisch aktive Ester aus α-Chlorcarbonsäuren und mesogenen Phenolen,
b) optisch aktive Ester des N-Acylprolins,
c) optisch aktive Ester von 1,3-Dioxolan-4-carbonsäuren,
d) optisch aktive Ester von Oxiran-2-carbonsäuren

sowie gegebenenfalls enthaltend als Komponente C einen oder mehrere Carbonsäureester der allgemeinen Formeln (V), (VI), (VII), (VIII) und (IX)

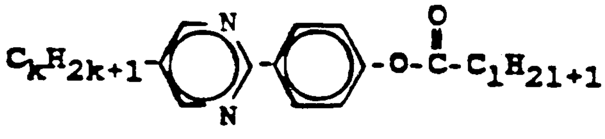 (V),

wobei
k eine ganze Zahl von 6 bis 14 und
l eine ganze Zahl von 2 bis 14 bedeuten kann,

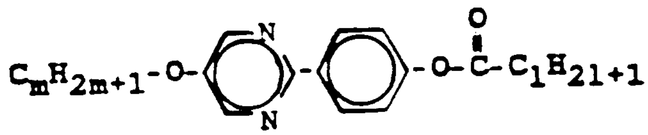 (VI),

wobei
m eine ganze Zahl von 5 bis 14 und
l eine ganze Zahl von 2 bis 14 bedeuten kann,

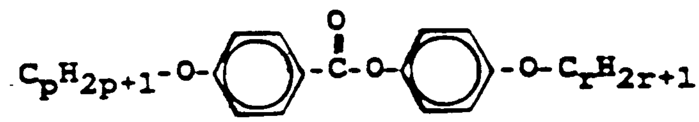 (VII),

wobei
p eine ganze Zahl von 7 bis 14 und
r eine ganze Zahl von 4 bis 14 bedeuten kann,

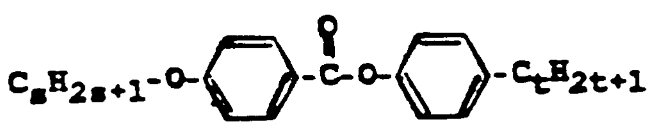 (VIII),

wobei
s eine ganze Zahl von 6 bis 14 und
t eine ganze Zahl von 6 bis 14 bedeuten kann,

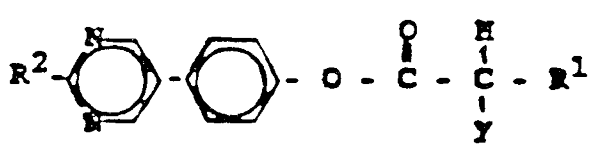 (IX),

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
Y = F, Cl, Br, CN oder $CF_3$ und
$R^1$ = verzweigtes ($C_3$-$C_9$)-Alkyl, Benzyl oder Phenyl bedeuten,

dadurch gekennzeichnet, daß die ferroelektrische Flüssigkristallmischung ferner eine optisch aktive Komponente D enthält, die aus einer oder mehreren Verbindungen der folgenden Gruppen (X) und/oder (XI) und/oder (XII) besteht,

Gruppe (X) : optisch aktive Ester der Tetrahydrofuran-2-carbonsäure mit mesogenen Phenolen
Gruppe (XI) : optisch aktive Aryl-2,3-epoxyalkyl-ether
Gruppe (XII) : optisch aktive 1,3-Dioxolan-4-yl-ether,

wobei die Mischung, bestehend aus
5-Octyloxy-2-[4-hexyloxyphenyl]pyrimidin
5-Octyloxy-2-[4-octyloxyphenyl]pyrimidin
5-Octyloxy-2-[4-butyloxyphenyl]pyrimidin
5-Octyloxy-2-[4-decyloxyphenyl]pyrimidin

5-Octyloxy-2-[4-dodecyloxyphenyl]pyrimidin
5-Octyloxy-2-[4-dodecylphenyl]pyrimidin
trans-4-pentyl-cyclohexancarbonsäure-[4-(5-decyl-pyrimidin-2-yl)]-phenylester
4-[5-Octylpyrimidin-2-yl]phenylhexancarbonsäureester
4-(Nonyloxypyrimidin-5-yl)-phenyl-2-chlor-4-methyl-pentansäureester (Racemat)
(R)-4-(5-n-Octyloxypyrimidin-2-yl)-phenyl-(2,2 pentamethylen-1,3-dioxolan-4-yl)methylether
(2R,3R)-3-Propyl-oxiran-2-carbonsäure-[4-(2-octyloxy-pyrimidin-5-yl)phenyl]-ester und
(R)-Tetrahydrofuran-2-carbonsäure-[4-(5-n-octylpyrimidin-2-yl)-phenyl]ester,
ausgenommen ist.

Bevorzugt wird eine ferroelektrische LC-Mischung, die 0,5 bis 30 Mol-% der optisch aktiven Komponente D enthält.

Auch bevorzugt wird eine Mischung, die zwei Dotierstoffe aus den Gruppen D und B enthält und bei der die Ganghöhe der in der nematischen Phase induzierten Helix bei einer gegebenen Temperatur annähernd kompensiert ist.

Besonders bevorzugt wird eine FLC-Mischung, die als Komponente D einen chiralen Tetrahydrofuran-2carbonsäureester (X) der folgenden allgemeinen Struktur (Xa) enthält:

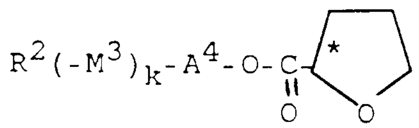 (Xa)

wobei

$R^2$ einen geradkettigen oder verzweigten Alkyl- oder Alkenylrest mit 6 bis 12 C-Atomen, der ein asymmetrisches C-Atom enthalten kann;
$-M^3$ -O, -S, -O-CO oder -CO
K Null oder 1
$-A^4$

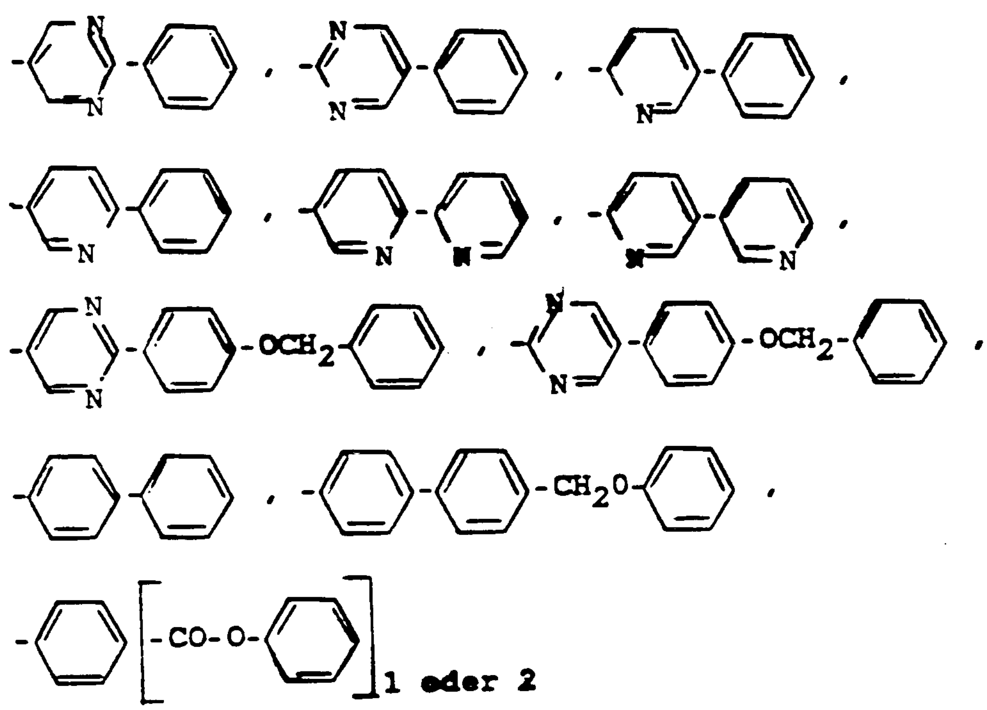

Ebenfalls besonders bevorzugt wird eine FLC-Mischung, die als Komponente D einen chiralen Epoxyalkylether der allgemeinen Struktur (XIa) enthält

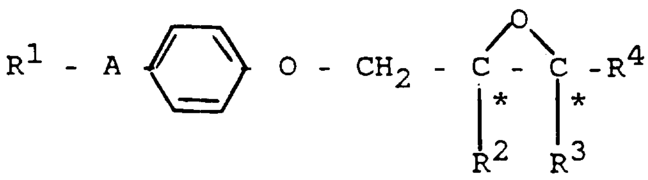

(XIa)

(Aryl-2,3-epoxyalkyl-ether)

- $R^1$ = geradkettiges oder verzweigtes ($C_1$-$C_{12}$)-Alkyl, wobei eine oder zwei nichtbenachbarte $CH_2$-Gruppen durch O- und/oder S-Atome ersetzt sein können,
- A = Diazin-2,5-diyl oder Diazin-3,6-diyl,
- $R^2$, $R^3$, $R^4$ = unabhängig voneinander H, geradkettiges ($C_1$-$C_{10}$)-Alkyl oder verzweigtes ($C_3$-$C_{10}$)-Alkyl wobei $R^2$, $R^3$ und $R^4$ nicht gleichzeitig H sind,

sowie eine FLC-Mischung, die als Komponente D einen chiralen Dioxolan-4-yl-ether der Struktur (XIIa) enthält

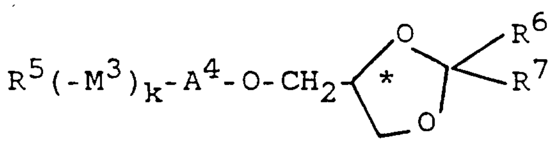

(XIIa)

worin bedeuten:

- $R^6$, $R^7$ Methyl oder zusammen mit dem C(2)-Atom des Dioxolanrings einen Cyclohexanring
- $R^5$ einen geradkettigen oder verzweigten Alkyl- oder Alkylenrest mit 6 bis 12 C-Atomen, der ein asymmetrisches C-Atom enthalten kann,
- $-M^3$ -O, -S oder -O-CO,
- K Null oder 1

$-A^4$

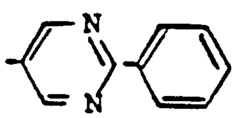 , 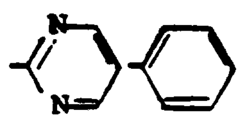 , 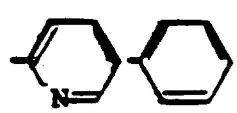 ,

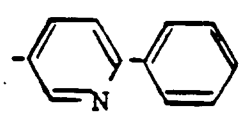 , 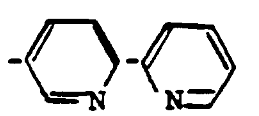 , 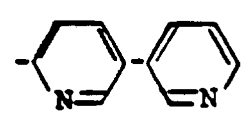 ,

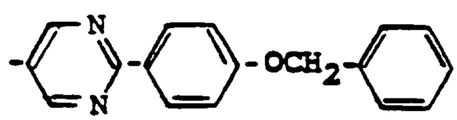 , 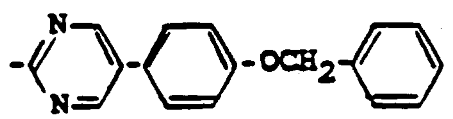 ,

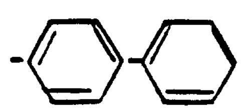 , 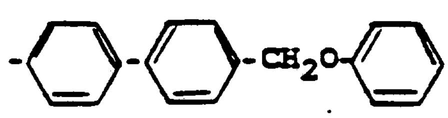 ,

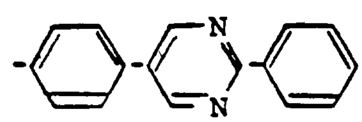 , 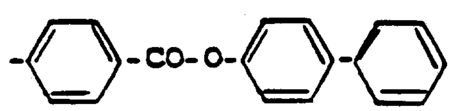 ,

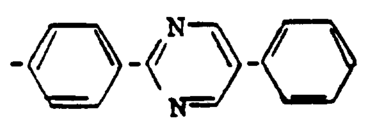 , oder 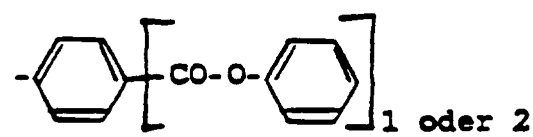

Ganz besonders bevorzugt werden ferroelektrische Flüssigkristallmischungen, die eine oder mehrere Verbindungen des Typs (Xb) und/oder (XIb) und/oder (XIIb) als Komponente D enthalten:

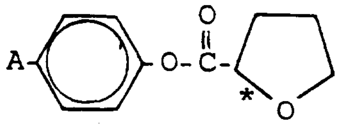

(Xb)

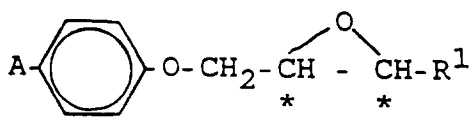

(XIb)

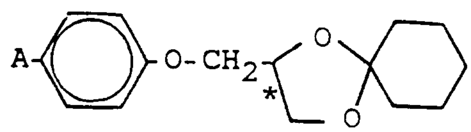

(XIIb)

wobei

A = Pyrimidin-2,5-diyl und

$R^1$ = $C_1$-$C_{10}$-Alkyl, wobei eine oder zwei nicht benachbarte $CH_2$-Gruppen durch O ersetzt sein können.

Die erfindungsgemäßen ferroelektrischen Flüssigkristallmischungen lassen sich vorteilhaft in elektrooptischen Bauteilen und Anzeigeelementen einsetzen, insbesondere deshalb, weil sie zu einem hohen Kontrast und einer kurzen Schaltzeit führen.

$d_1$) Die optisch aktiven Ester der Tetrahydrofuran-carbonsäure (X) mit (R)-Konfiguration erzeugen in den erfindungsgemäßen Mischungen eine positive spontane Polarisation und einen positiven Helix-Drehsinn.

Für die Kompensation sind optisch-aktive 1,3-Dioxolan-4-carbonsäureester mit (R)-Konfiguration geeignet, da diese ein positives $P_s$ und einen so stark negativen pitch erzeugen, daß zur Kompensation nur 1 Gewichtsteil Dioxolanderivat auf 3 Gewichtsteile Tetrahydrofuran-carbonsäure eingesetzt werden muß.

$d_2$) Ebenso lassen sich zur pitch-Kompensation in Verbindung mit den Tetrahydrofuran-carbonsäureestern (X) optisch aktive Epoxyalkylether (XI) einsetzen, jedoch müssen hierbei beide Komponenten im etwa gleichen Gewichtsverhältnis eingesetzt werden.

$e_1$) Optisch aktive Aryl-2,3-epoxyalkylether (XI) mit (2S,3S)-Konfiguration erzeugen in den erfindungsgemäßen Mischungen eine positive spontane Polarisation und einen negativen pitch, der durch Zugabe optisch aktiver Oxiran-2-carbonsäureester (gemäß DE-A 3 718 174) mit (2R,3R)-Konfiguration kompensiert werden kann. Diese Substanzklasse ist zur pitch-Kompensation besonders geeignet, da in der Regel nur 1 Gewichtsteil Oxiran-carbonsäureester auf 3 Gewichtsteile Aryl-2,3-epoxyalkylether (XI) benötigt wird.

$f_1$) Optisch aktive Ether von 1,3-Dioxolan-Derivaten mit R-Konfiguration erzeugen in den erfindungsgemäßen Mischungen einen negativen Pitch. Sie sind daher zur Kompensation der Mischungen mit optisch aktiven Oxiran-2-carbonsäureestern mit positiven $P_s$ und (2R,3R)-Konfiguration geeignet. Wegen des kleinen pitches der Dioxolanether benötigt man zur pitch-Kompensation relativ geringe Mengen dieser Substanz. Zur pitch-Kompensation hat sich ein Gewichts-Verhältnis dieser Dotierstoffe von etwa 1:1 bewährt.

g) In den pitchkompensierten Dotierstoffkombinationen aus der Gruppe $e_1$ und $d_2$ kann anstelle der optisch-aktiven Aryl-2,3-epoxyalkylether mit (2S,3S)-Konfiguration auch bevorzugt die Verbindungen mit (2S,3R)-Konfiguration zur Pitch-Kompensation verwendet werden. Von Vorteil ist dabei, daß die Verbindung mit (2S,3R)-Konfiguration in den erfindungsgemäßen Mischungen eine höhere spontane Polarisation erzeugt und eine so kleine Helix induziert, daß zur Pitch-Kompensation im Vergleich zu den genannten Kombinationen nur etwa die halbe Menge an Aryl-2,3-epoxyalkylether mit (2S,3R)-Konfiguration notwendig ist.

So wurde überraschenderweise gefunden, daß der Gehalt von etwa 10 Mol-% eines optisch-aktiven Tetrahydrofuran-2-carbonsäureesters (X) in den Mischungen von DE 38 31 226 und in DE-A-3 909 356. zu einer Erniedrigung des Schmelzpunktes bis zu 5 °C führt und eine spontane Polarisation von bis zu +30 $nC \cdot cm^{-2}$ induziert.

Für die gebrauchsfertigen ferroelektrischen Flüssigkristall-Mischungen werden die Werte für
die spontane Polarisation $P_s$ [$nC/cm^2$]
der Kontrast K
die optische Schaltzeit $\tau$ [µs]
die Ganghöhe der Helix (pitch) in der N*-Phase [µm]
die dielektrische Anisotropie $\Delta\epsilon$
und die optische Anisotropie $\Delta n$ (alle bei einer Temperatur von 25 °C) ermittelt.

Die $P_s$-Werte werden nach der Methode von H. Diamant et al. (Rev. Sci. Instr., 28, 30, 1957) gemessen, wobei Meßzellen mit 2 µm Elektrodenabstand und geriebenem Polyimid als Orientierungsschicht verwendet werden.

Zur Bestimmung von $\tau$ und K wird die Meßzelle auf dem Drehtisch eines Polarisationsmikroskops zwischen gekreuztem Analysator und Polarisator befestigt.

Für die Bestimmung des Kontrastes [K] wird die Meßzelle durch Drehen so positioniert, daß eine Photodiode minimalen Lichtdurchgang anzeigt (Dunkelzustand).

Die Mikroskopbeleuchtung wird so geregelt, daß die Photodiode für alle Zellen die gleiche Lichtintensität anzeigt.

Nach einem Schaltvorgang ändert sich die Lichtintensität (Hellzustand) und der Kontrast wird aus dem Verhältnis der Lichtintensitäten dieser Zustände berechnet.

Mit Hilfe einer Photodiode erfolgt die Bestimmung der Schaltzeit $\tau$, indem die Anstiegszeit des Lichtsignals von 10 auf 90 % Signalhöhe gemessen wird. Die Schaltspannung besteht aus Rechteckpulsen und beträgt ± 10 V/µm.

Die Bestimmung des N*-pitches erfolgte in keilförmigen Zellen nach der Methode von Grandjean-Cano [F. Grandjean, CR Acad, Sci, (Paris) 172, 71 (1921); R. Cano, Bull. Soc. Franc. Mineral. Crystallogr. XC, 333 (1967)].

Die Phasenumwandlungstemperaturen wurden beim Aufheizen mit Hilfe eines Polarisationsmikroskop anhand der Texturänderungen bestimmt. Die Bestimmung des Schmelzpunktes wurde hingegen mit einem DSC-Gerät durchgeführt. Die Angabe der Phasenumwandlunstemperaturen zwischen den Phasen
Nematisch (N bzw. N*)
Smektisch-C ($S_c$ bzw. $S_c$*)
Smektisch-A ($S_A$ bzw. $S_A$*)
Kristallin (X.)
erfolgt in °C und die Werte stehen zwischen den Phasenbezeichnungen in der Phasenfolge.

**Beispiel 1**

a) Eine ferroelektrische flüssigkristalline Mischung bestehend aus 6 Komponenten

| | |
|---|---|
| 5-Octyloxy-2-(4-butyloxy-phenyl)-pyrimidin | 24 Mol-% |
| 5-Octyloxy-2-(4-hexyloxy-phenyl)-pyrimidin | 22,8 Mol-% |
| 5-Octyloxy-2-(4-octyloxy-phenyl)-pyrimidin | 10,5 Mol-% |
| 5-Octyloxy-2-(4-decyloxy-phenyl)-pyrimidin | 19,2 Mol-% |
| trans-4-Pentyl-cyclohexancarbonsäure-[4-(5-decyl-pyrimidin-2-yl)]-phenylester | 13,5 Mol-% |
| (R)-Tetrahydrofuran-2-carbonsäure-[4-(5-n-octylpyrimidin-2-yl)-phenyl]-ester) (Dotierstoff d) | 10 Mol-% |

zeigt die folgenden flüssigkristallinen Phasenbereiche:
X 7 $S_c$* 65,8 $S_A$* 76,5 N* 92 I
und weist bei 25 °C eine spontane Polarisation von 23 $nC \cdot cm^{-2}$ einen Kontrast von 7 und eine Schaltzeit von 40 µs auf. Bei einer Temperatur von 90 °C ist der Pitch dieser Mischung + 3,9 µm.

b) Im Vergleich dazu weist die, in DE 3831226.3 beanspruchte flüssigkristalline Mischung, die sich von der obengenannten ferroelektrischen Mischung nur dadurch unterscheidet, daß sie keinen Dotierstoff enthält, folgende Phasenbereiche auf
X 9 $S_c$ 84 $S_A$ 93 N 105 I

Die ferroelektrische Mischung weist dazu im Vergleich einen um 2°C niedrigeren Schmelzpunkt auf.

**Beispiel 2**

a) Eine ferroelektrische flüssigkristalline Mischung bestehend aus 6 Komponenten

| | |
|---|---|
| 5-Octyloxy-2-(4-butyloxy-phenyl)-pyrimidin | 24 Mol-% |
| 5-Octyloxy-2-(4-hexyloxy-phenyl)-pyrimidin | 22,8 Mol-% |
| 5-Octyloxy-2-(4-octyloxy-phenyl)-pyrimidin | 10,5 Mol-% |
| 5-Octyloxy-2-(4-decyloxy-phenyl)-pyrimidin | 19,2 Mol-% |
| trans-4-Pentyl-cyclohexancarbonsäure-[4-(5-decyl-pyrimidin-2-yl)]-phenylester | 13,5 Mol-% |
| (2S,3S)-2-[4-(5-Octyl-pyrimidin-2-yl)-phenyl]-methyl-3-butyl-oxiran (Dotierstoff e) | 10 Mol-% |

zeigt folgende flüssigkristalline Phasenbereiche:
X 6 $S_c$* 81,4 $S_A$* 88,7 N* 101 I
und weist bei 25°C eine spontane Polarisation von +17 $nC \cdot cm^{-2}$, einen Kontrast von 8 und eine Schaltzeit von 30 $\mu$s auf. Bei einer Temperatur von 90°C ist der Pitch dieser Mischung -5,5 $\mu$m.
b) Im Vergleich dazu weist die, in DE 3831226.3 beanspruchte flüssigkristalline Mischung, die sich von der obengenannten ferroelektrischen Mischung nur dadurch unterscheidet, daß sie keinen Dotierstoff enthält, folgende Phasenbereiche auf
X 9 $S_c$ 84 $S_A$ 93 N 105 I
Die ferroelektrische Mischung weist dazu im Vergleich einen um 3°C niedrigeren Schmelzpunkt auf.

**Beispiel 3**

a) Eine ferroelektrische flüssigkristalline Mischung bestehend aus 6 Komponenten

| | |
|---|---|
| 5-Octyloxy-2-(4-butyloxy-phenyl)-pyrimidin | 24 Mol-% |
| 5-Octyloxy-2-(4-hexyloxy-phenyl)-pyrimidin | 22,8 Mol-% |
| 5-Octyloxy-2-(4-octyloxy-phenyl)-pyrimidin | 10,5 Mol-% |
| 5-Octyloxy-2-(4-decyloxy-phenyl)-pyrimidin | 19,2 Mol-% |
| trans-4-Pentyl-cyclohexancarbonsäure-[4-(5-decyl-pyrimidin-2-yl)]-phenylester | 13,5 Mol-% |
| (2S,3R)-2-[4-(5-Octyl-pyrimidin-2-yl)-phenyloxy]-methyl-3-propyl-oxiran (Dotierstoff e) | 10 Mol-% |

zeigt folgende flüssigkristalline Phasenbereiche:
X 7 $S_c$* 67 $S_A$* 83,6 N* 96 I
und weist bei 25°C eine spontane Polarisation von +22 $nC \cdot cm^{-2}$, einen Kontrast von 8 und eine Schaltzeit von 25 $\mu$s auf. Bei einer Temperatur von 90°C ist der Pitch dieser Mischung -2,6 $\mu$m.
b) Im Vergleich dazu weist die, in DE 3831226.3 beanspruchte flüssigkristalline Mischung, die sich von der obengenannten ferroelektrischen Mischung nur dadurch unterscheidet, daß sie keinen Dotierstoff enthält, folgende Phasenbereiche auf
X 9 $S_c$ 84 $S_A$ 93 N 105 I
Die ferroelektrische Mischung weist dazu im Vergleich einen um 2°C niedrigeren Schmelzpunkt auf.

**Beispiel 4**

a) Eine ferroelektrische flüssigkristalline Mischung bestehend aus 6 Komponenten

| | |
|---|---|
| 5-Octyloxy-2-(4-butyloxy-phenyl)-pyrimidin | 24 Mol-% |
| 5-Octyloxy-2-(4-hexyloxy-phenyl)-pyrimidin | 22,8 Mol-% |
| 5-Octyloxy-2-(4-octyloxy-phenyl)-pyrimidin | 10,5 Mol-% |
| 5-Octyloxy-2-(4-decyloxy-phenyl)-pyrimidin | 19,2 Mol-% |
| trans-4-Pentyl-cyclohexancarbonsäure-[4-(5-decyl-pyrimidin-2-yl)]-phenylester | 13,5 Mol-% |
| (S)-4-(2-Octyloxy-pyrimidin-5-yl)-phenyl-[spiro-(1,3-dioxolan-2,1'-cyclohexan)-4-yl]-methyl-ether (Dotierstoff f) | 5 Mol-% |

zeigt folgende flüssigkristalline Phasenbereiche:
X 7 $S_c$* 81 $S_A$* 92 N* 102 I
und weist bei 25 °C eine spontane Polarisation von -0,1 nC•cm$^{-2}$, einen Kontrast von 7 und eine Schaltzeit von 2,3 µs auf. Bei einer Temperatur von 93 °C ist der Pitch dieser Mischung -25 µm.
b) Im Vergleich dazu weist die, in DE 3831226.3 beanspruchte flüssigkristalline Mischung, die sich von der obengenannten ferroelektrischen Mischung nur dadurch unterscheidet, daß sie keinen Dotierstoff enthält, folgende Phasenbereiche auf
X 9 $S_c$ 84 $S_A$ 93 N 105 I
Die ferroelektrische Mischung weist dazu im Vergleich einen um 2 °C niedrigeren Schmelzpunkt auf.

**Beispiel 5**

a) Eine ferroelektrische Mischung bestehend aus 7 Komponenten

| | |
|---|---|
| Mischung aus Beispiel 1b) | 90 Mol-% |
| (2S,3S)-2-[4-(5-Octyl-pyrimidin-2-yl)-phenyloxy]-methyl-3-butyl-oxiran | 7,7 Mol-% |
| (2R,3R)-3-Propyl-oxiran-2-carbonsäure-[4-(2-octyloxy-pyrimidin-5-yl)-phenyl]-ester (Dotierstoffkombination $e_1$) | 2,3 Mol-% |

weist die folgenden flüssigkristallinen Phasenbereiche auf:
X 4,5 $S_c$* 80,5 $S_A$* 88 N* 100,5 I
Bei 25 °C weist diese Mischung eine spontane Polarisation von 18 nC•cm$^{-2}$, einen Kontrast von 9 und bei einer Feldstärke von 10 V•µm$^{-1}$ eine Schaltzeit von 45 µs auf. Diese Mischung hat den besonderen Vorteil, daß der Pitch über den ganzen Temperaturbereich der nematischen Phase kompensiert ist.

| Pitch [µm] | > 30 | > 30 | > 30 |
|---|---|---|---|
| Temperatur [ °C] | 90 | 95 | 99 |

Außerdem hat diese ferroelektrische Mischung den Vorteil, daß der Schmelzpunkt um 4,5 °C niedriger liegt als in der Mischung 1b.

**Beispiel 6**

a) Eine ferroelektrische Mischung aus den 9 Komponenten

| | |
|---|---|
| 5-Octyloxy-2-(4-hexyloxy-phenyl)-pyrimidin | 18 Mol-% |
| 5-Octyloxy-2-(4-octyloxy-phenyl)-pyrimidin | 7 Mol-% |
| 5-Octyloxy-2-(4-butyloxy-phenyl)-pyrimidin | 17 Mol-% |
| 5-Octyloxy-2-(4-decyloxy-phenyl)-pyrimidin | 9 Mol-% |
| 5-Octyloxy-2-(4-dodecyloxy-phenyl)-pyrimidin | 9 Mol-% |
| 5-Octyl-2-(4-dodecyloxy-phenyl)-pyrimidin | 14,5 Mol-% |
| trans-4-Pentyl-cyclohexancarbonsäure-[4-(5-decyl-pyrimidin-2-yl)]-phenylester | 21,5 Mol-% |
| (s)-4-(2-Octyloxy-pyrimidin-5-yl)-phenyl-[spiro-(1,3-dioxolan-2,1'-cyclohexan)-4-yl]-methyl-ether | 1,6 Mol-% |
| (2R,3R)-3-Propyl-oxiran-2-carbonsäure-[4-(2-octyloxy-pyrimidin-5-yl)--phenyl]-ester | 2,4 Mol-% |
| (Dotierstoffkombination $f_1$) | |

zeigt folgende flüssigkristalline Phasenbereiche:
X -3 $S_c$* 79 $S_A$* 86 N* 100,5 I
und weist bei 25 °C eine spontane Polarisation von +8,6 nC•cm$^{-2}$, einen Kontrast von 8 und eine Schaltzeit von 125 $\mu$s auf. Bei einer Temperatur von 90 °C ist der Pitch dieser Mischung 60 $\mu$m.
b) Im Vergleich dazu weist die, in DE 3831226.3 beanspruchte flüssigkristalline Mischung, die sich von der obengenannten ferroelektrischen Mischung nur dadurch unterscheidet, daß sie keinen Dotierstoff enthält, folgende Phasenbereiche auf
X -2 $S_c$ 81 $S_A$ 86 N 104 I

**Beispiel 7**

Eine ferroelektrische Mischung bestehend aus den Komponenten

| | |
|---|---|
| Mischung aus Beispiel 1b) | 90 Mol-% |
| (R)-[2-(4'-Dodecycloxyphenyl)-pyrimidin-5-yl]-2,2-dimethyl-1,3-dioxolan-4-carbonsäureester | 6,07 Mol-% |
| (R)-Tetrahydrofuran-2-carbonsäure-[4-(2-n-octyloxypyrimidin-5-yl)-phenyl]-ester | 3,93 Mol-% |
| (Dotierstoffkombination $d_1$) | |

und weist die folgenden flüssigkristallinen Phasenbereiche auf
X 7,4 $S_c$* 81 $S_A$* 86 N* 100 I
Bei 25 °C weist diese Mischung eine spontane Polarisation von 18 nC•cm$^{-2}$, und bei einem Schaltfeld von 10 V•$\mu$m$^{-1}$ eine Schaltzeit von 51 $\mu$s auf. Der Kontrast der Meßzelle liegt bei 9. Der Schmelzpunkt dieser Mischung liegt um 1,5 °C unter dem der Mischung aus Beispiel 1b. Der Pitch dieser Mischung ist bei 90 °C größer als 40 $\mu$m.

**Beispiel 8**

Eine ferroelektrische Mischung aus den Komponenten

| | |
|---|---|
| flüssigkristalline Mischung aus Beispiel 1b) | 90 Mol-% |
| (R)-Tetrahydrofuran-2-carbonsäure-[4-(2-n-octyloxypyrimidin-5-yl)-phenyl]-ester | 5,93 Mol-% |
| (2S,3R)-2-[4-(5-Octyl-pyrimidin-2-yl)-phenyloxy]-methyl-3-butyl-oxiran | 3,38 Mol-% |

zeigt die folgenden flüssigkristallinen Phasenbereiche:
X 5 $S_c$* 72,5 $S_A$* 87 N* 98 I
Bei 25 °C weist diese Mischung eine spontane Polarisation von 23 nC•cm$^{-2}$, und bei einer Feldstärke von 10 V•$\mu$m$^{-1}$ eine Schaltzeit von 42 $\mu$s auf. Der Schmelzpunkt dieser Mischung liegt um 4 °C unterhalb des

Schmelzpunktes der Mischung aus Beispiel 1b). Der Pitch dieser Mischung ist bei 90 °C größer als 21 µm.

**Beispiel 9**

Eine ferroelektrische Mischung aus den Komponenten

| | |
|---|---|
| flüssigkristalline Mischung aus Beispiel 1b) | 94,3 Mol-% |
| (2R,3R)-4-Propyl-oxiran-2-carbonsäure-[4-(2-octyloxy-pyrimidin-5-yl)-phenyl]-ester | 2,3 Mol-% |
| (2S,3R)-2-[4-(5-Octyl-pyrimidin-2-yl)-phenyloxy]-methyl-3-butyl-oxiran | 3,4 Mol-% |
| (Dotierstoffkombination g) | |

zeigt die folgenden flüssigkristallinen Phasenbereiche:
X 7 $S_c$* 70 $S_A$* 85 N* 99 I
Bei 25 °C weist diese Mischung eine spontane Polarisation von 19 $nC \cdot cm^{-2}$, und bei einer Feldstärke von 10 $V \cdot \mu m^{-1}$ eine Schaltzeit von 32 µs auf. Der Schmelzpunkt dieser Mischung liegt um 4 °C unterhalb des Schmelzpunktes der Mischung aus Beispiel 1b). Der Pitch dieser Mischung ist bei 90 °C größer als 50 µm.

Diese Mischung hat im Vergleich zu der Mischung aus Beispiel 5 eine um 13 µs kürzere Schaltzeit und weist bei einer geringeren Dotierstoffgesamtkonzentration eine höhere spontane Polarisation auf.

Diese Ergebnisse belegen die Vorteile der Verwendung von Oxiranethern mit (2S,3R) Konfiguration im Vergleich zu den Oxiranethern mit (2R,3R) Konfiguration.

**Beispiel 10**

a) Eine ferroelektrische Mischung aus den Komponenten

| | |
|---|---|
| 5-Octyl-2-(4-heptonoyloxy-phenyl)-pyrimidin | 17,6 Mol-% |
| 5-Octyloxy-2-(4-hexyloxy-phenyl)-pyrimidin | 11,8 Mol-% |
| 5-Octyloxy-2-(4-octyloxy-phenyl)-pyrimidin | 4 Mol-% |
| 5-Octyloxy-2-(4-butyloxy-phenyl)-pyrimidin | 13 Mol-% |
| 5-Octyloxy-2-(4-decyloxy-phenyl)-pyrimidin | 7 Mol-% |
| 5-Octyloxy-2-(4-dodecyloxy-phenyl)-pyrimidin | 7 Mol-% |
| 5-Octyl-2-(4-dodecyloxy-phenyl)-pyrimidin | 10,5 Mol-% |
| trans-4-Pentyl-cyclohexancarbonsäure-[4-(5-decyl-pyrimidin-2-yl)]-phenylester | 16,7 Mol-% |
| (s)-4-(2-Octyloxy-pyrimidin-5-yl)-phenyl-[spiro-(1,3-dioxolan-2,1'-cyclohexan)-4-yl]-methyl-ether | 5,4 Mol-% |
| (2R,3R)-3-Propyl-oxiran-2-carbonsäure-[4-(2-octyloxy-pyrimidin-5-yl)--phenyl]-ester | 6,6 Mol-% |
| (Dotierstoffkombination $f_1$) | |

zeigt die folgenden flüssigkristallinen Phasenbereiche:
X -8 $S_c$* 65 $S_A$* 74 N* 86 I
und weist bei einer Temperatur von 25 °C eine spontane Polarisation von 30 $nC \cdot cm^{-2}$ und eine Schaltzeit von 41 µs auf.

Diese Mischung hat den Vorteil, daß der Pitch über dem ganzen Temperaturbereich der nematischen Phase kompensiert ist.

| | | | |
|---|---|---|---|
| Pitch [µm] | 20 | 35 | > 100 |
| Temperatur [°C] | 75 | 76 | 77-80 |

b) Im Vergleich dazu weist eine flüssigkristalline Mischung, die sich von der obengenannten ferroelektrischen Mischung nur dadurch unterscheidet, daß sie keinen Dotierstoff enthält, folgende Phasenbereiche auf
X -5 $S_c$ 71 $S_A$ 78 N 94 I
Die Dotierstoffe haben also außerdem den Vorteil, daß sie den Schmelzpunkt senken.

**Beispiel 11**

a) Eine ferroelektrische Mischung aus folgenden Komponenten

| | |
|---|---|
| Mischung aus Beispiel 6b)<br>(2S,3S)-2-[4-(5-Octyl-pyrimidin-2-yl)-phenyloxy]-methyl-3-butyl-oxiran<br>(2R,3R)-3-Propyl-oxiran-2-carbonsäure-[4-(2-octyloxy-pyrimidin-5-yl)-phenyl]-ester<br>(Dotierstoffkombination $e_1$) | 76,5 Mol-%<br>18 Mol-%<br>5,5 Mol-% |

weist die folgenden flüssigkristallinen Phasenbereiche auf:
X - 1 $S_c$* 65 $S_A$* 68 N* 83 I
Bei einer Temperatur von 25 °C weist diese Mischung eine spontane Polarisation von 50 nC•cm$^{-2}$ und bei einer Feldstärke von 10 V•µm$^{-1}$ eine Schaltzeit von 50 µs auf. Diese Mischung hat den besonderen Vorteil, daß der Pitch über den ganzen Temperaturbereich der nematischen Phase kompensiert ist.

| Pitch [µm] | > 60 | >24 | > 14 |
|---|---|---|---|
| Temperatur [°C] | 69 | 74 | 79 |

**Beispiel 12**

a) Eine ferroelektrische Mischung aus 9 Komponenten

| | |
|---|---|
| Mischung aus Beispiel 6b)<br>(2S,3S)-2-[4-(5-Octyl-pyrimidin-2-yl)-phenyloxy]-methyl-3-butyl-oxiran<br>(2R,3R)-3-Propyl-oxiran-2-carbonsäure-[4-(2-octyloxy-pyrimidin-5-yl)-phenyl]-ester<br>(Dotierstoffkombination $e_1$) | 96,2 Mol-%<br>2,9 Mol-%<br>0,9 Mol-% |

weist die folgenden flüssigkristallinen Phasenbereiche auf:
X 1 $S_c$* 66 $S_A$* 74 N* 90 I
Bei 25 °C weist diese Mischung eine spontane Polarisation von 5,8 nC•cm$^{-2}$, und bei einer Feldstärke von 10 V•µm$^{-1}$ eine Schaltzeit von 114 µs auf. Der Pitch in der nematischen Phase beträgt bei einer Temperatur von 80 °C > 30 µm.

**Beispiel 13**

a) Eine ferroelektrische Mischung aus den Komponenten

| | |
|---|---|
| Mischung aus Beispiel 10b)<br>(2S,3S)-2-[4-(5-Octyl-pyrimidin-2-yl)-phenyloxy]-methyl-3-propyl-oxiran<br>(2R,3R)-3-Propyl-oxiran-2-carbonsäure-[4-(2-octyloxy-pyrimidin-5-yl)-phenyl]-ester<br>(Dotierstoffkombination $e_1$) | 95,65 Mol-%<br>2,8 Mol-%<br>1,55 Mol-% |

weist die folgenden flüssigkristallinen Phasenbereiche auf:
X - 4 $S_c$* 67 $S_A$* 75 N* 91 I
Bei 25 °C weist diese Mischung eine spontane Polarisation von 10,3 nC•cm$^{-2}$, und bei einer Feldstärke von 10 V•µm$^{-1}$ eine Schaltzeit von 76 µs auf. Der Pitch dieser Mischung ist bei einer Temperatur von 80 °C größer als 10 µm.

**Beispiel 14**

a) Eine ferroelektrische Mischung aus den 9 Komponenten

| | |
|---|---|
| 5-Octyloxy-2-(4-hexyloxy-phenyl)-pyrimidin | 10,3 Mol-% |
| 5-Octyloxy-2-(4-octyloxy-phenyl)-pyrimidin | 3,5 Mol-% |
| 5-Octyloxy-2-(4-butyloxy-phenyl)-pyrimidin | 11,5 Mol-% |
| 5-Octyloxy-2-(4-decyloxy-phenyl)-pyrimidin | 6,3 Mol-% |
| 5-Octyl-2-(4-dodecyloxy-phenyl)-pyrimidin | 9,2 Mol-% |
| trans-4-Pentyl-cyclohexancarbonsäure-[4-(5-decyl-pyrimidin-2-yl)]-phenylester | 14,8 Mol-% |
| trans-4-Pentyl-cyclohexancarbonsäure-[4-(5-dodecyl-pyrimidin-2-yl)]-phenylester- | 7,9 Mol-% |
| 5-Octyl-2-(4-heptonoyloxy-phenyl)-pyrimidin | 15,5 Mol-% |
| (2R,3R)-3-Hexyl-oxiran-2-carbonsäure-[4-(2-(4-butyldimethylsilylbutyloxy-pyrimidin-5-yl)-phenyl]-ester | 3 Mol-% |
| (2S,3S)-3-Butyloxiran-2-methyl-[2-(4-(4-butyldimethylsilylbutyloxy)-phenyl) pyrimidin-5-yl]-ether | 18 Mol-% |
| (Dotierkombination $e_1$) | |

zeigt folgende flüssigkristalline Phasenbereiche:
X -11 $S_c$* 71 $S_A$* 75 N* 86 I
und weist bei einer Temperatur von 25 °C eine spontane Polarisation von 47 $nC \cdot cm^{-2}$ und eine Schaltzeit von 80 $\mu$s auf. Bei einer Temperatur von 78 °C ist der Pitch dieser Mischung 8 $\mu$m.
b) Im Vergleich dazu weist eine flüssigkristalline Mischung, die sich von der obengenannten ferroelektrischen Mischung nur dadurch unterscheidet, daß sie keinen Dotierstoff enthält, folgende Phasenbereiche auf
X -2 $S_c$ 75,2 N 100 I
Die Dotierstoffe haben also den Vorteil, daß sie zusätzlich den Schmelzpunkt senken.

**Patentansprüche**

1. Ferroelektrische flüssigkristalline Mischung, enthaltend als Komponente A mindestens zwei 5-Alkoxy-2-(alkyloxy-phenyl)pyrimidine der allgemeinen Formel (I)

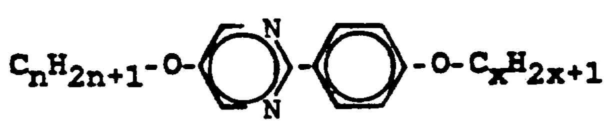

(I),

in der die Alkylreste geradkettige Alkylreste sind, in denen n eine ganze Zahl von 6 bis 14 und x eine ganze Zahl von 2 bis 14 bedeutet,
und gegebenenfalls einen oder mehrere Cyclohexancarbonsäureester der allgemeinen Formel (II)

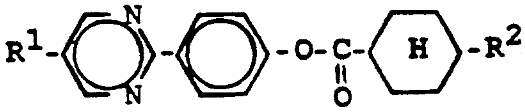 (II),

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeutet,
und gegebenenfalls ein oder mehrere Alkenyloxy-phenyl-pyrimidin-Derivate der allgemeinen Formel (III)

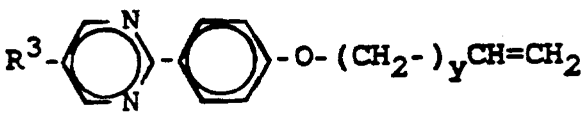 (III)

in der $R^3$ eine Alkylkette mit 7 bis 16 C-Atomen oder eine Alkyloxykette mit 6 bis 14 C-Atomen und y eine ganze Zahl von 4 bis 14 bedeutet,
und gegebenenfalls ein oder mehrere Alkyl-pyrimidin-alkoxy-phenyl-Derivate der allgemeinen Formel (IV)

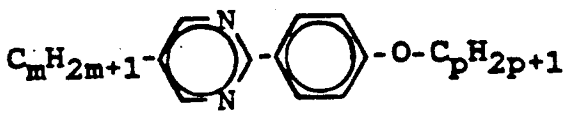 (IV)

in der m und p unabhängig voneinander ganze Zahlen von 6 bis 14 sind,
sowie gegebenenfalls als Komponente B eine optisch aktive Verbindung aus der Gruppe

a) optisch aktive Ester aus α-Chlorcarbonsäuren und mesogenen Phenolen,
b) optisch aktive Ester des N-Acylprolins,
c) optisch aktive Ester von 1,3-Dioxolan-4-carbonsäuren,
d) optisch aktive Ester von Oxiran-2-carbonsäuren

sowie gegebenenfalls enthaltend als Komponente C einen oder mehrere Carbonsäureester der allgemeinen Formeln (V), (VI), (VII), (VIII) und (IX)

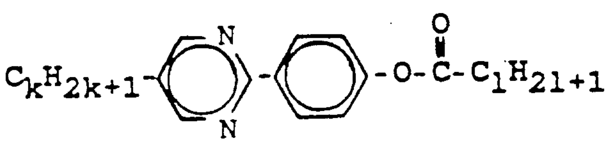 (V),

wobei
k eine ganze Zahl von 6 bis 14 und
l eine ganze Zahl von 2 bis 14 bedeuten kann,

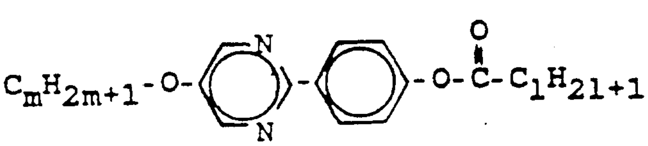 (VI),

wobei
m eine ganze Zahl von 5 bis 14 und
l eine ganze Zahl von 2 bis 14 bedeuten kann,

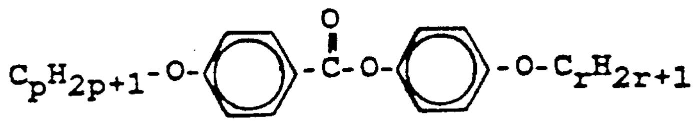 (VII),

wobei
p eine ganze Zahl von 7 bis 14 und
r eine ganze Zahl von 4 bis 14 bedeuten kann,

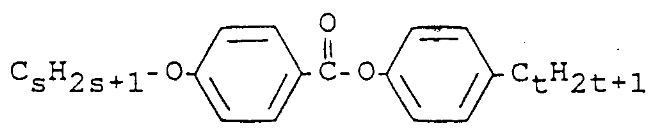 (VIII),

wobei
s eine ganze Zahl von 6 bis 14 und
t eine ganze Zahl von 6 bis 14 bedeuten kann,

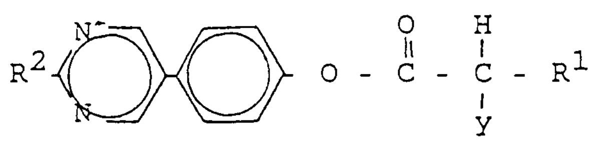 (IX),

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
Y = F, Cl, Br, CN oder $CF_3$ und
$R^1$ = verzweigtes ($C_3$-$C_9$)-Alkyl, Benzyl oder Phenyl bedeuten,
dadurch gekennzeichnet, daß die ferroelektrische Flüssigkristallmischung ferner eine optisch aktive Komponente D enthält, die aus einer oder mehreren Verbindungen der folgenden Gruppen (X) und/oder (XI) und/oder (XII) besteht,
Gruppe (X) : optisch aktive Ester der Tetrahydrofuran-2-carbonsäure mit mesogenen Phenolen
Gruppe (XI) : optisch aktive Aryl-2,3-epoxyalkyl-ether mesogener Phenole
Gruppe (XII) : optisch aktive 1,3-Dioxolan-4-yl-ether mesogener Phenole,
wobei die Mischung bestehend aus :
5-Octyloxy-2-[4-hexyloxyphenyl]pyrimidin
5-Octyloxy-2-[4-octyloxyphenyl]pyrimidin
5-Octyloxy-2-[4-butyloxyphenyl]pyrimidin
5-Octyloxy-2-[4-decyloxyphenyl]pyrimidin
5-Octoloxy-2-[4-dodecyloxyphenyl]pyrimidin
5-Octyloxy-2-[4-dodecylphenyl]pyrimidin
trans-4-pentyl-cyclohexancarbonsäure-[4-(5-decyl-pyrimidin-2-yl)]-phenylester
4-[5-Octylpyrimidin-2-yl]phenylhexancarbonsäureester
4-(Nonyloxypyrimidin-5-yl)-phenyl-2-chlor-4-methyl-pentansäureester (Racemat)
(R)-4-(5-n-Octyloxypyrimidin-2-yl)-phenyl-(2,2 pentamethylen-1,3-dioxolan-4-yl)methylether
(2R,3R)-3-Propyl-oxiran-2-carbonsäure-[4-(2-octyloxy-pyrimidin-5-yl)phenyl]-ester und
(R)-Tetrahydrofuran-2-carbonsäure-[4-(5-n-octylpyrimidin-2-yl)-phenyl]ester
ausgenommen ist.

**2.** Ferroelektrische Flüssigkristallmischung nach Anspruch 1, dadurch gekennzeichnet, daß sie 0,5 bis 30 Mol-% der optisch aktiven Komponente D enthält.

3. Ferroelektrische Flüssigkristallmischung nach Anspruch 1, dadurch gekennzeichnet, daß sie zwei Dotierstoffe aus den Gruppen D und B enthält, und bei der die Ganghöhe der (in der nematischen Phase induzierten) Helix bei einer gegebenen Temperatur annähernd Kompensiert ist.

4. Ferroelektrische Flüssigkristallmischung nach Anspruch 1, dadurch gekennzeichnet, daß sie als Komponente D einen chiralen Tetrahydrofuran-2-carbonsäureester (X) der folgenden allgemeinen Struktur (Xa) enthält:

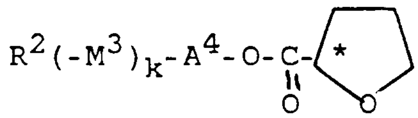

(Xa)

wobei

| | |
|---|---|
| $R^2$ | einen geradkettigen oder verzweigten Alkyl- oder Alkenylrest mit 6 bis 12 C-Atomen, der ein asymmetrisches C-Atom enthalten kann; |
| $-M^3$ | -O, -S, -O-CO oder -CO |
| K | Null oder 1 |
| $-A^4$ | |

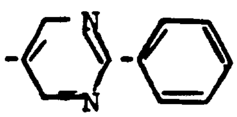, 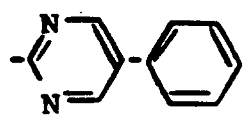, 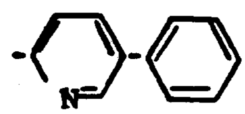,

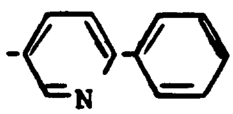, 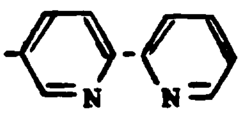, 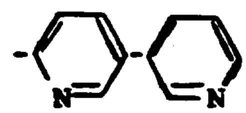,

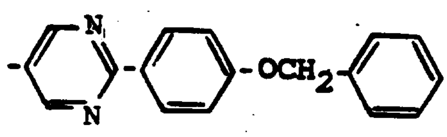, 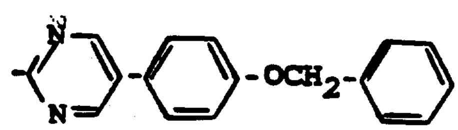,

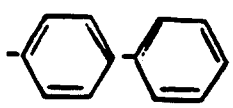, 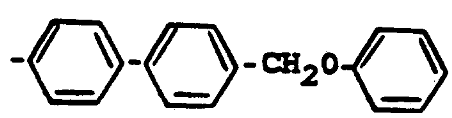,

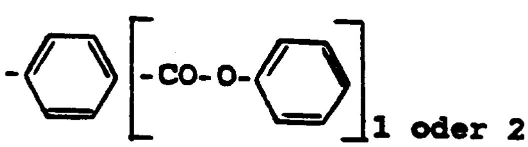

5. Ferroelektrische Flüssigkristallmischung nach Anspruch 1, dadurch gekennzeichnet, daß sie als Komponente D einen chiralen Epoxyalkyl-ether der allgemeinen Struktur (XIa) enthält

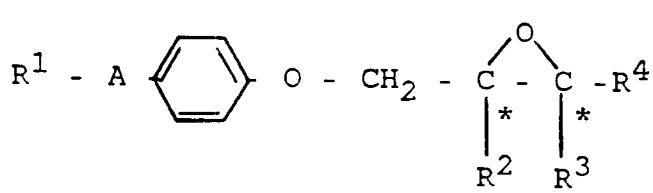

(XIa)

(Aryl-2,3-epoxyalkyl-ether)

| | | |
|---|---|---|
| $R^1$ | = | geradkettiges oder verzweigtes ($C_1$-$C_{12}$)-Alkyl, wobei eine oder zwei nichtbenachbarte $CH_2$-Gruppen durch O- und/oder S-Atome ersetzt sein können, |
| A | = | Diazin-2,5-diyl oder Diazin-3,6-diyl, |
| $R^2$, $R^3$, $R^4$ | = | unabhängig voneinander H, geradkettiges ($C_1$-$C_{10}$)-Alkyl oder verzweigtes ($C_3$-$C_{10}$)-Alkyl wobei $R^2$, $R^3$ und $R^4$ nicht gleichzeitig H sind. |

**6.** Ferroelektrische Flüssigkristallmischung nach Anspruch 1, dadurch gekennzeichnet, daß sie als Komponente D einen chiralen Dioxolan-4-yl-ether der Struktur (XIIa) enthält

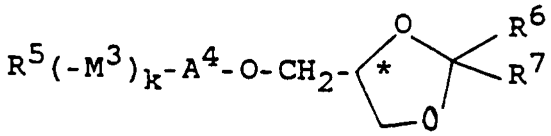

(XIIa)

worin bedeuten:

| | |
|---|---|
| $R^6$, $R^7$ | Methyl oder Zusammen mit dem C(2)-Atom des Dioxolanrings einen Cyclohexanring |
| $R^5$ | einen geradkettigen oder verzweigten Alkyl- oder Alkylenrest mit 6 bis 12 C-Atomen, der ein asymmetrisches C-Atom enthalten kann, |
| $-M^3$ | -O, -S oder -O-CO, |
| K | Null oder 1 |
| $-A^4$ | |

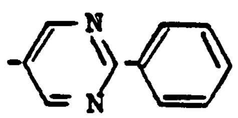 , 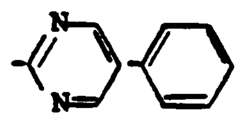 , 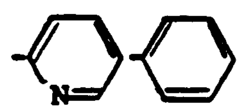 ,

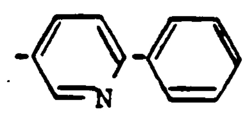 , 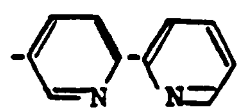 , 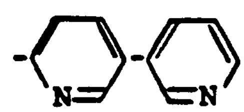 ,

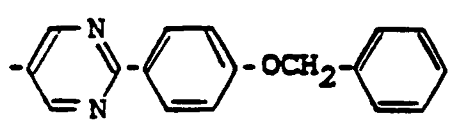 , 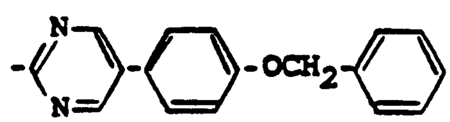 ,

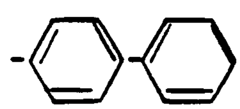 , 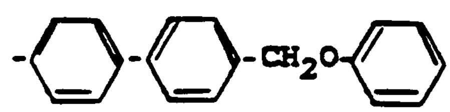 ,

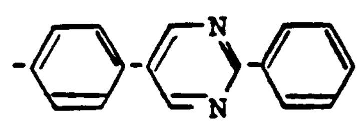 , 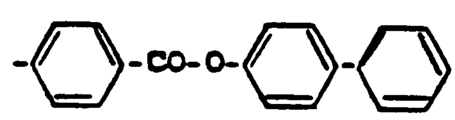 ,

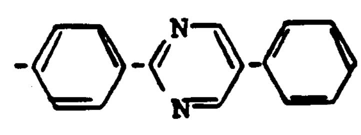 , oder 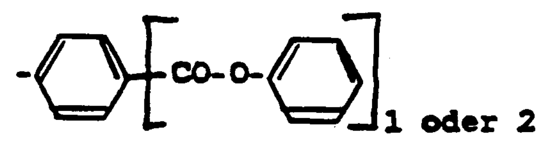

**7.** Ferroelektrische Flüssigkristallmischung nach Anspruch 1, dadurch gekennzeichnet, daß sie als Komponente D einen oder mehrere der Verbindungen der Struktur (Xb) und/oder (XIb) und/oder (XIIb) enthält:

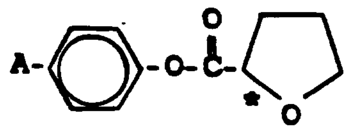

(Xb)

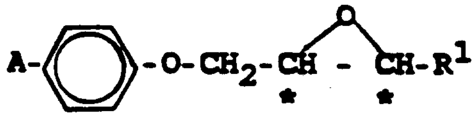

(XIb)

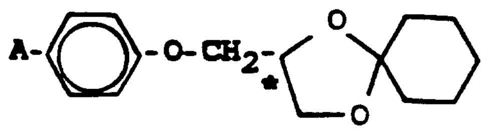

(XIIb)

wobei

A = Pyrimidin-2,5-diyl und

$R^1$ = $C_1$-$C_{10}$-Alkyl, wobei eine oder zwei nicht benachbarte $CH_2$-Gruppen durch O ersetzt sein können.

8. Elektro-optisches Bauteil, enthaltend eine ferroelektrische Mischung nach einem der Ansprüche 1 bis 7.

9. Verwendung von FLC-Mischungen nach einem der Ansprüche 1 bis 7 in elektrooptischen Schalt- und Anzeigeelementen.

## Claims

1. A ferroelectric liquid-crystalline mixture containing, as component A, at least two 5-alkoxy-2-(alkoxyphenyl)pyrimidines of the formula (I)

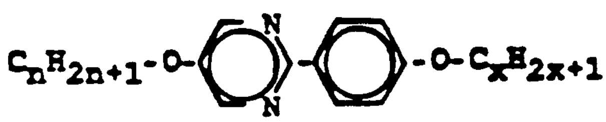

(I)

in which the alkyl radicals are straight-chain alkyl radicals in which n is an integer from 6 to 14 and x is an integer from 2 to 14,
and, if appropriate, one or more cyclohexanecarboxylates of the general formula (II)

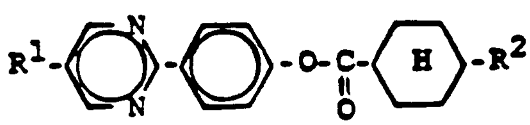

(II)

in which $R^1$ is an alkyl radical having 10 to 16 carbon atoms or an alkoxy radical having 8 to 14 carbon atoms, and $R^2$ is an alkyl radical having 2 to 9 carbon atoms,
and, if appropriate, one or more alkenyloxyphenyl-pyrimidine derivatives of the formula (III)

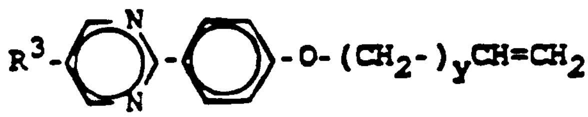 (III)

in which $R^3$ is an alkyl chain having 7 to 16 carbon atoms or an alkoxy chain having 6 to 14 carbon atoms, and y is an integer from 4 to 14,
and, if appropriate, one or more alkylpyrimidine-alkoxyphenyl derivatives of the formula (IV)

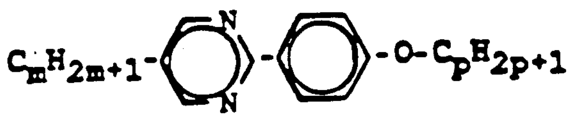 (IV)

in which m and p, independently of one another, are integers from 6 to 14,
and if appropriate as component B, an optically active compound from the group

a) optically active eaters made from $\alpha$-chlorocarboxylic acids and mesogenic phenols,
b) optically active esters of N-acylproline,
c) optically active esters of 1,3-dioxolane-4-carboxylic acids, and
d) optically active eaters of oxirane-2-carboxylic acids,

and if appropriate containing, as component C, one or more carboxylates of the formulae (V), (VI), (VII), (VIII) or (IX)

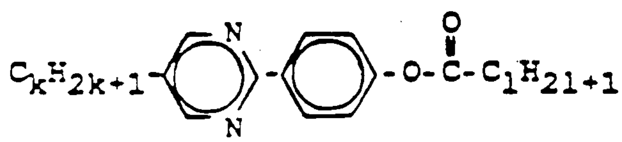 (V)

where
k may be an integer from 6 to 14, and
l may be an integer from 2 to 14,

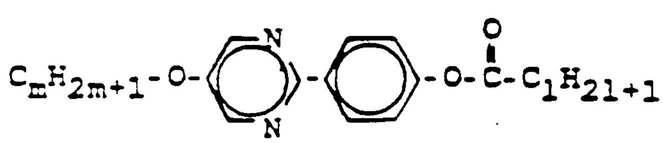 (VI)

where
m may be an integer from 5 to 14, and
l may be an integer from 2 to 14,

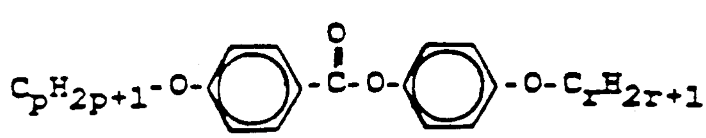 (VII)

where
p may be an integer from 7 to 14, and
r may be an integer from 4 to 14,

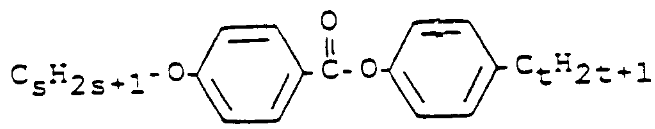

(VIII)

where
s may be an integer from 6 to 14, and
t may be an integer from 6 to 14,

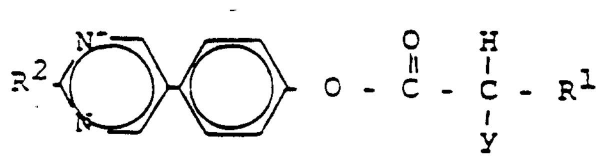

(IX)

where
$R^2$ is straight-chain or branched ($C_1$-$C_{12}$)alkyl or alkenyl, it being possible for one or two non-adjacent $CH_2$ groups to be replaced by O and/or S atoms,
y is F, Cl, Br, CN or $CF_3$ and
$R^1$ is branched ($C_3$-$C_9$)alkyl, benzyl or phenyl,
wherein the ferroelectric liquid-crystal mixture furthermore contains an optically active component D which comprises one or more compounds from the following groups (X) and/or (XI) and/or (XII),
Group (X) : optically active esters of tetrahydrofuran-2-carboxylic acid with mesogenic phenols
Group (XI) : optically active aryl 2,3-epoxy-alkyl ethers of mesogenic phenols
Group (XII) : optically active 1,3-dioxolan-4-yl ethers of mesogenic phenols,
with the exception of the mixture comprising:
5-octyloxy-2-[4-hexyloxyphenyl]pyrimidine
5-octyloxy-2-[4-octyloxyphenyl]pyrimidine
5-octyloxy-2-[4-butoxyphenyl]pyrimidine
5-octyloxy-2-[4-decyloxyphenyl]pyrimidine
5-octyloxy-2-[4-dodecyloxyphenyl]pyrimidine
5-octyloxy-2-[4-dodecylphenyl]pyrimidine
[4-(5-decylpyrimidin-2-yl)]phenyl trans-4-pentylcyclohexanecarboxylate
4-[5-octylpyrimidin-2-yl]phenylhexanecarboxylic acid ester [sic]
4-(nonyloxypyrimidin-5-yl)phenyl-2-chloro-4-methyl-pentanoic acid ester [sic] (racemate)
(R)-4-(5-n-octyloxypyrimidin-2-yl)phenyl 2,2-pentamethylene-1,3-dioxolan-4-yl)methyl ether
4-(2-octyloxypyrimidin-5-yl)phenyl (2R,3R)-3-propyloxirane-2-carboxylate
and
4-(5-n-octylpyrimidin-2-yl)phenyl (R)-tetrahydrofuran-2-carboxylate.

2. A ferroelectric liquid-crystal mixture as claimed in claim 1, which contains 0.5 to 30 mol-% of the optically active component D.

3. A ferroelectric liquid-crystal mixture as claimed in claim 1, which contains two dopes from Groups D and B, and in which the pitch of the helix (induced in the nematic phase) is approximately compensated at a given temperature.

4. A ferroelectric liquid-crystal mixture as claimed in claim 1, which contains, as component D, a chiral tetrahydrofuran-2-carboxylate (X) of the following general structure (Xa):

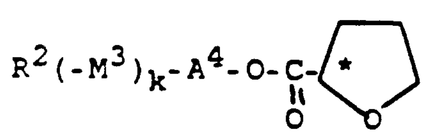

(Xa)

where

$R^2$ is a straight-chain or branched alkyl or alkenyl radical having 6 to 12 carbon atoms, which may contain an asymmmetric carbon atom;

$-M^3$ is -O, -S, -O-CO or -CO,

k is zero or 1,

$-A^4$ is

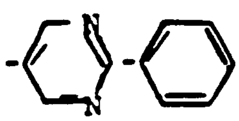 , 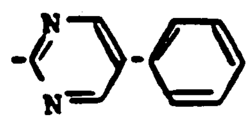 , 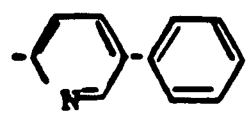 ,

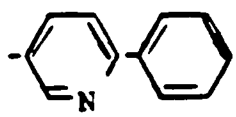 , 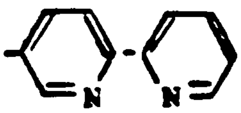 , 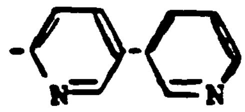 ,

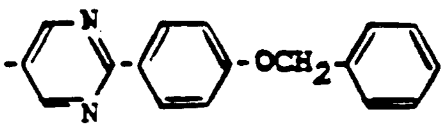 , 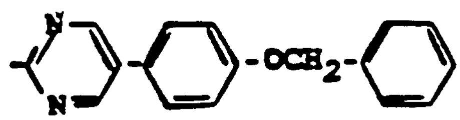 ,

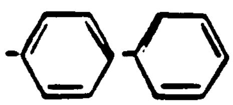 , 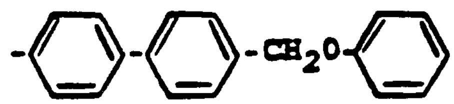 ,

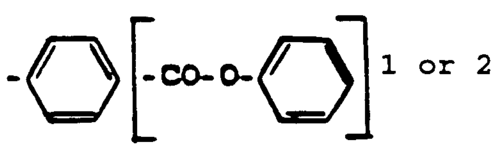

5. A ferroelectric liquid-crystal mixture as claimed in claim 1, which contains, as component D, a chiral epoxyalkyl ether of the general structure (XIa)

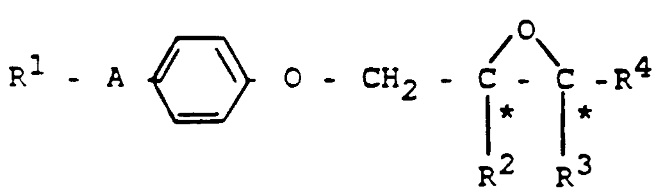 (XIa)

(aryl 2,3-epoxyalkyl ether)

$R^1$ is straight-chain or branched $(C_1-C_{12})$alkyl, it being possible for one or two non-adjacent $CH_2$ groups to be replaced by O and/or S atoms,

A is diazine-2,5-diyl or diazine-3,6-diyl, and

$R^2$, $R^3$ and $R^4$, independently of one another, are H, straight-chain $(C_1-C_{10})$alkyl or branched $(C_3-C_{10})$alkyl, where $R^2$, $R^3$ and $R^4$ are not simultaneously H.

6. A ferroelectric liquid-crystal mixture as claimed in claim 1, which contains, as component D, a chiral dioxolan-4-yl ether of the structure (XIIa)

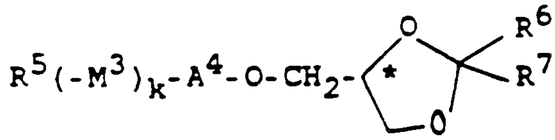

(XIIa)

in which:

| | |
|---|---|
| $R^6$ and $R^7$ | are methyl or, together with the C(2) atom of the dioxolane ring, are a cyclohexane ring, |
| $R^5$ | is a straight-chain or branched alkyl or alkylene radical having 6 to 12 carbon atoms, which may contain an asymmetric carbon atom, |
| $-M^3$ | is -O, -S or -O-CO, |
| k | is zero or 1, and |

$-A^4$ is

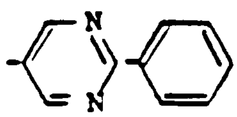 , 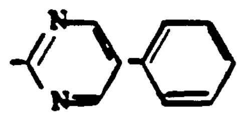 , 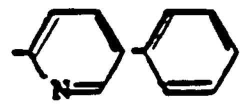 ,

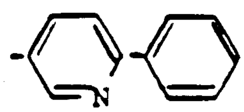 , 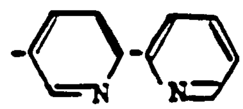 , 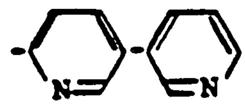 ,

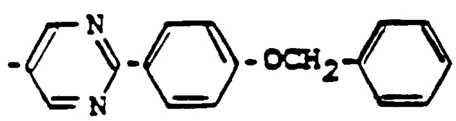 , 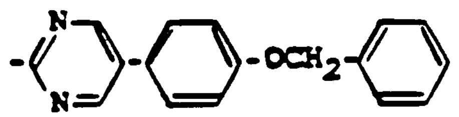 ,

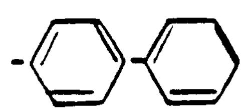 , 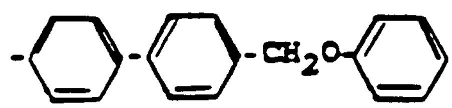 ,

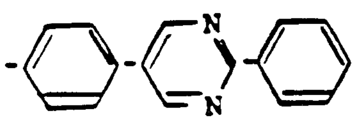 , 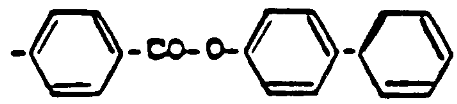 ,

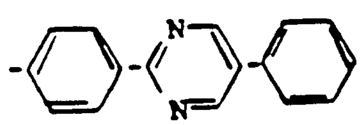 , or 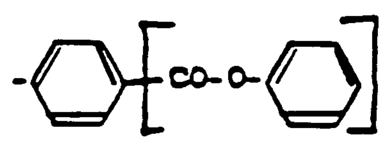 1 or 2

7. A ferroelectric liquid-crystal mixture as claimed in claim 1, which contains, as component D, one or more compounds of the structure (Xb) and/or (XIb) and/or (XIIb):

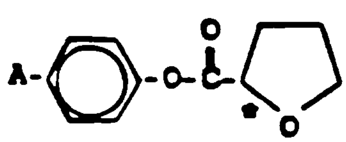

(Xb)

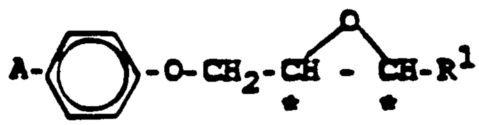

(XIb)

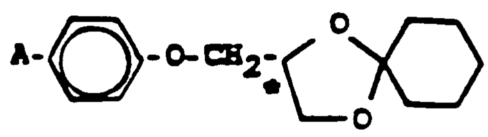

(XIIb)

where

A is pyrimidine-2,5-diyl, and

$R^1$ is $C_1$-$C_{10}$-alkyl, it being possible for one or two non-adjacent $CH_2$ groups to be replaced by O.

**8.** An electrooptical component containing a ferroelectric mixture as claimed in any one of claims 1 to 7.

**9.** The use of an FLC mixture as claimed in any one of claims 1 to 7 in electrooptical switching and display elements.

**Revendications**

**1.** Mélange de cristaux liquides ferro-électrique contenant en tant que composant A au moins deux 5-alcoxy-2-(alkyloxyphényl)-pyrimidines de formule générale (I) :

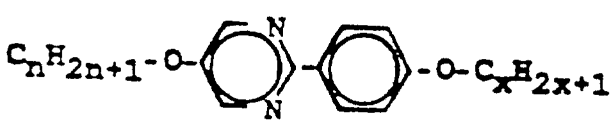

(I),

dans laquelle les radicaux alkyle sont des radicaux alkyle linéaires, dans lesquels n est un nombre entier de 6 à 14 et x un nombre entier de 2 à 14, et
éventuellement un ou plusieurs esters de l'acide cyclohexane-carboxylique de formule générale (II) :

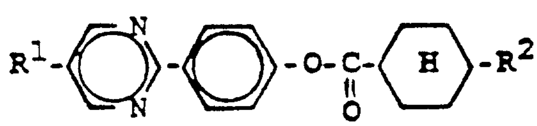

(II),

dans laquelle $R^1$ représente un radical alkyle avec 10 à 16 atomes de C ou un radical alcoxy avec 8 à 14 atomes de C et $R^2$ représente un radical alkyle avec 2 à 9 atomes de C, et éventuellement un ou plusieurs dérivés d'alcényloxyphénylpyrimidine de formule générale (III) :

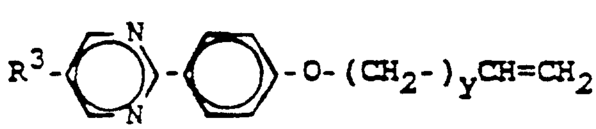

(III),

dans laquelle $R^3$ représente une chaîne alkyle avec 7 à 16 atomes de C ou une chaîne alkyloxy avec 6

à 14 atomes de C et y est un nombre entier de 4 à 14, et
éventuellement un ou plusieurs dérivés d'alkyl-pyrimidine-alcoxyphényle de formule générale (IV) :

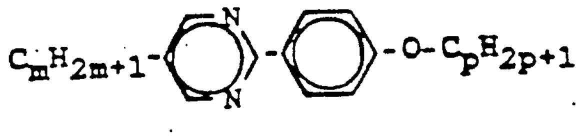

(IV),

dans laquelle m et p, indépendamment l'un de l'autre, sont des nombres entiers de 6 à 14,
ainsi qu'éventuellement en tant que composant B un composé optiquement actif pris dans le groupe suivant :

a) esters optiquement actifs d'acides $\alpha$-chlorocarboxyliques et de phénols mésogènes,
b) esters optiquement actifs de la N-acylproline,
c) esters optiquement actifs d'acides 1,3-dioxolan-4-carboxyliques,
d) esters optiquement actifs d'acides oxiran-2-carboxyliques,

ainsi qu'éventuellement contenant en tant que composant C un ou plusieurs esters d'acides carboxyliques de formules générales (V), (VI), (VII), (VIII) et (IX) :

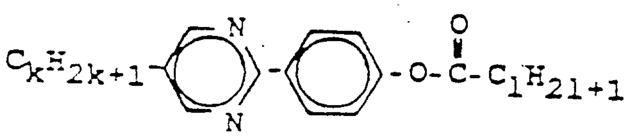

(V),

k pouvant représenter un nombre entier de 6 à 14 et
l un nombre entier de 2 à 14,

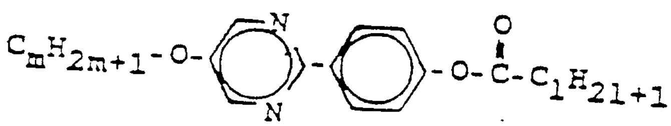

(VI),

m pouvant représenter un nombre entier de 5 à 14 et
l un nombre entier de 2 à 14,

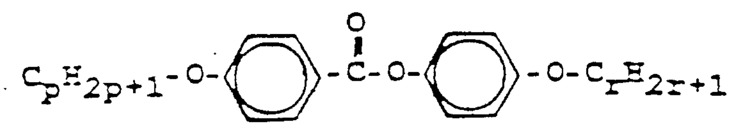

(VII),

p pouvant représenter un nombre entier de 7 à 14 et
r un nombre entier de 4 à 14,

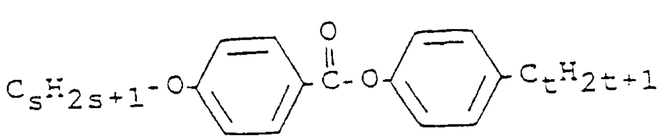

(VIII),

s pouvant représenter un nombre entier de 6 à 14 et
t un nombre entier de 6 à 14,

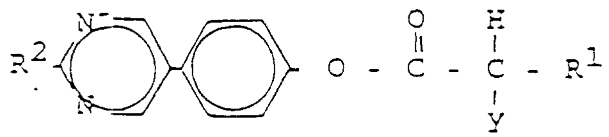 (IX),

$R^2$ = alcényle ou alkyle en $C_1$-$C_{12}$ linéaire ou ramifié, 1 ou 2 groupes $CH_2$ non voisins pouvant être remplacés par des atomes O et/ou S;
Y = F, Cl, Br, CN ou $CF_3$ et
$R^1$ = alkyle en $C_3$-$C_9$ ramifié, benzyle ou phényle,

caractérisé en ce que le mélange de cristaux liquides ferro-électriques contient de plus un composant D optiquement actif, qui se compose d'un ou de plusieurs composés des groupes (X) et/ou (XI) et/ou (XII) suivants :

Groupe (X) : esters optiquement actifs de l'acide tétrahydrofuran-2-carboxylique avec des phénols mésogènes
Groupe (XI) : aryl-2,3-époxyalkyl-éthers optiquement actifs
Groupe (XII) : 1,3-dioxolan-4-yl-éthers optiquement actifs

le mélange se composant de :
la 5-octyloxy-2-[4-hexyloxyphényl]-pyrimidine,
la 5-octyloxy-2-[4-octyloxyphényl]-pyrimidine,
la 5-octyloxy-2-[4-butyloxyphényl]-pyrimidine,
la 5-octyloxy-2-[4-décyloxyphényl]-pyrimidine,
la 5-octyloxy-2-[4-dodécyloxyphényl]-pyrimidine,
la 5-octyloxy-2-[4-dodécylphényl]-pyrimidine,
l'ester [4-(5-décyl-pyrimidin-2-yl]-phénylique de l'acide trans-4-pentyl-cyclohexane-carboxylique,
l'ester de l'acide 4-[5-octylpyrimidin-2-yl]phényl-carboxylique
l'ester de l'acide 4-(nonyloxypyrimidin-5-yl)-phényl-2-chloro-4-méthyl-pentanoïque (racémate)
(R)-4-(5-n-octyloxypyrimidin-2-yl)-phényl-(2,2-pentaméthylène-1,3-dioxolan-4-yl)-méthyléther,
l'ester [4-(2-octyloxy-pyrimidin-5-yl]-phénylique de l'acide (2R,3R)-3-propyl-oxiran-2 carboxylique et
l'ester [4-(5-n-octyl-pyrimidin-2-ylique] de l'acide (R)-3-tétrahydrofuran-2 carboxylique
étant exclu.

**2.** Mélange de cristaux liquides ferro-électriques selon la revendication 1, caractérisé en ce qu'il contient de 0,5 à 30 moles % du composant D optiquement actif.

**3.** Mélange de cristaux liquides ferro-électriques selon la revendication 1, caractérisé en ce qu'il contient deux agents de dopage des groupes D et B, et dans lequel la hauteur du pas de l'hélice (induit dans la phase nématique) est presqu'entièrement conpensée pour une température donnée.

**4.** Mélange de cristaux liquides ferro-électriques selon la revendication 1, caractérisé en ce qu'il contient en tant que composant D un ester de l'acide tétrahydrofuran-2-carboxylique chiral (X) ayant la structure générale (Xa) suivante :

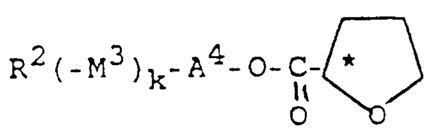 (Xa)

$R^2$ représentant un radical alcényle ou alkyle linéaire ou ramifié avec 6 à 12 atomes de carbone, qui peut contenir un atome de C asymétrique,
$-M^3$ -O, -S, -O-CO ou -CO,
K est zéro ou 1,
$-A^4$

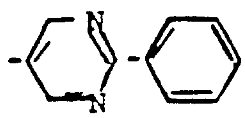 , 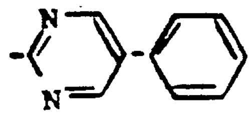 , 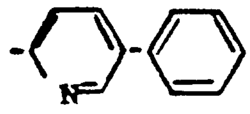 ,

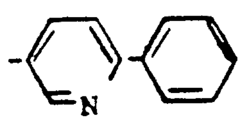 , 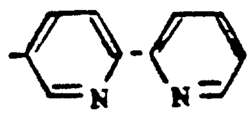 , 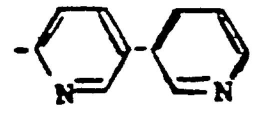 ,

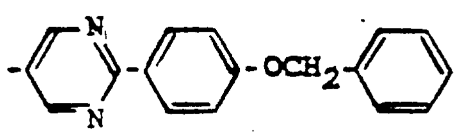 , 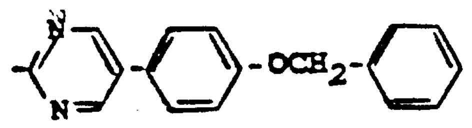 ,

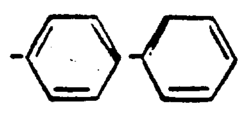 , 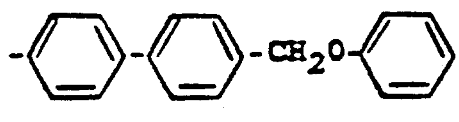 ,

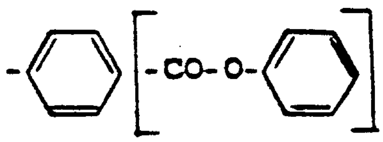 1 ou 2

**5.** Mélange de cristaux liquides ferro-électriques selon la revendication 1, caractérisé en ce qu'il contient en tant que composant D un époxyalkyl-éther chiral de structure générale (XIa) suivante :

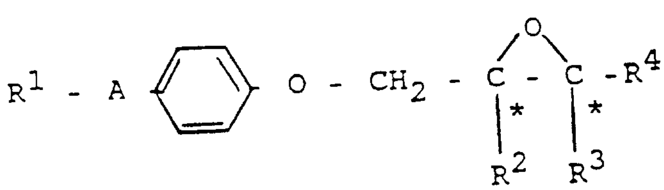 (XIa)

(Aryl-2,3-époxyalkyl-éther)

$R^1$ = alkyle en $C_1$-$C_{12}$ linéaire ou ramifié, 1 ou 2 groupes $CH_2$ non voisins pouvant être remplacés par des atomes O et/ou S,

A = diazin-2,5-diyle ou diazin-3,6-diyle,

$R^2$, $R^3$, $R^4$ = indépendamment l'un de l'autre, H, alkyle en $C_1$-$C_{10}$ linéaire ou alkyle en $C_3$-$C_{10}$ ramifié, $R^2$, $R^3$ et $R^4$ ne sont pas simultanément H,

**6.** Mélange de cristaux liquides ferro-électriques selon la revendication 1, caractérisé en ce qu'il contient en tant que composant D un dioxolan-4-yl-éther chiral de structure (XIIa) suivante :

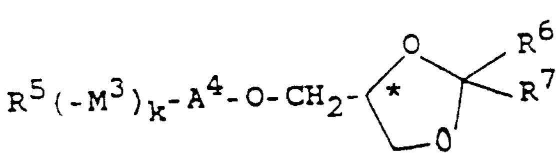 (XIIa)

dans laquelle représentent :

$R^6$, $R^7$ méthyle ou ensemble avec l'atome C(2) du cycle dioxolane forment un cycle cyclohexa-

ne,

| | |
|---|---|
| $R^5$ | un radical alkylène ou alkyle linéaire ou ramifié avec 6 à 12 atomes de C, qui peut contenir un atome de C asymétrique, |
| $-M^3$ | -O, -S ou -O-CO, |
| K | est zéro ou 1, |
| $-A^4$ | |

, 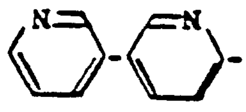 , 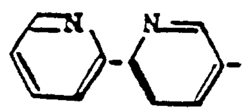 , 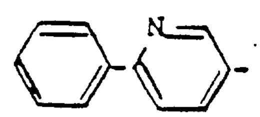

, 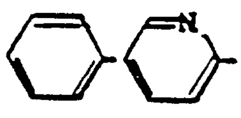 , 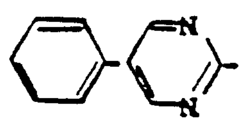 , 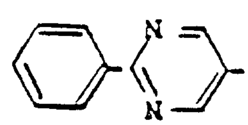

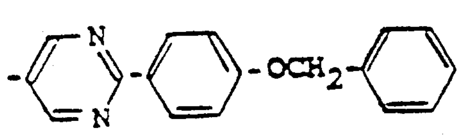 , 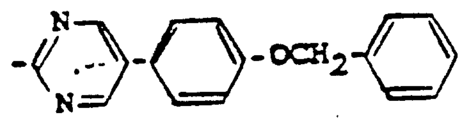 ,

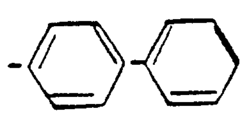 , 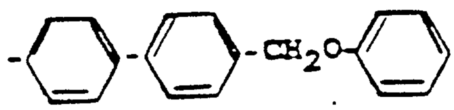 ,

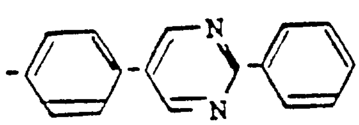 , 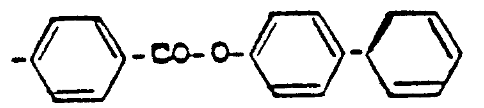 ,

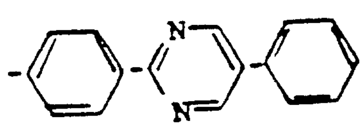 , ou 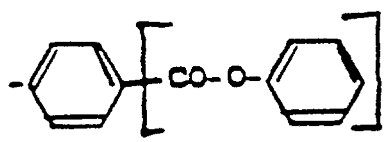 1 ou 2

**7.** Mélange de cristaux liquides ferro-électriques selon la revendication 1, caractérisé en ce qu'il contient en tant que composant D un ou plusieurs composés de structure (Xb) et/ou (XIb) et/ou (XIIb) :

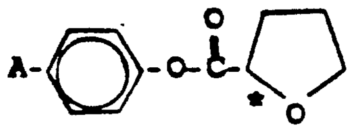

(Xb)

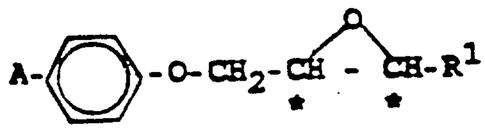

(XIb)

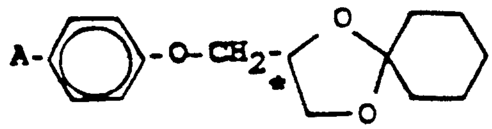

(XIIb)

A = pyrimidin-2,5-diyle et

$R^1$ = alkyle en $C_1$-$C_{10}$, un ou deux groupes en $CH_2$ non voisins pouvant être remplacés par O.

**8.** Élément électro-optique contenant un mélange ferro-électrique selon l'une des revendications 1 à 7.

**9.** Utilisation des mélanges de CLF selon l'une des revendications 1 à 7 dans des éléments de commutation et d'affichage électro-optiques.